# EUROPEAN PATENT APPLICATION

(11) **EP 4 804 316 A1**
(43) Date of publication of application: **09.09.2026**
(21) Application number: 24885570.2
(22) Date of filing: 23.10.2024
(51) Int. Cl.: H01M 50/443, H01G 11/52, H01M 4/02, H01M 4/13, H01M 50/414, H01M 50/42, H01M 50/434, H01M 50/446, H01M 50/451, H01M 50/489

(54) **COMPOSITION FOR ELECTROCHEMICAL ELEMENT FUNCTIONAL LAYER, LAMINATE FOR ELECTROCHEMICAL ELEMENT, AND ELECTROCHEMICAL ELEMENT**

(30) Priority: 31.10.2023 JP 2023187105
(71) Applicant: Zeon Corporation, Tokyo 100-8246 (JP)
(72) Inventor: OGAKI, Gai, Tokyo 100-8246 (JP); TAKISHIMA, Keisuke, Tokyo 100-8246 (JP)
(74) Representative: Maiwald GmbH
(86) International application number: PCT/JP2024/037825
(87) International publication number: WO 2025/094797

(57) **Abstract**

Provided is a composition for an electrochemical device functional layer with which it is possible to form a functional layer for an electrochemical device that has excellent normal temperature adhesiveness and can reduce internal resistance of an electrochemical device. The composition for an electrochemical device functional layer contains a particulate polymer A. The particulate polymer A has a volume-average particle diameter of not less than 0.75 µm and not more than 17.5 µm, an amount of elution into tetrahydrofuran of not less than 0.05 mass% and not more than 60 mass%, and a storage modulus at 25°C of 35 MPa or less.

## Description

### TECHNICAL FIELD

The present disclosure relates to a composition for an electrochemical device functional layer, a laminate for an electrochemical device, and an electrochemical device.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications. An electrochemical device generally includes constituent members such as a positive electrode, a negative electrode, and a separator that separates the positive and negative electrodes from each other to prevent a short circuit between the positive and negative electrodes.

Constituent members that include a porous membrane layer for improving heat resistance and strength, an adhesive layer for adhering battery members to each other, or the like (hereinafter, these layers are also referred to collectively using the term "functional layer for an electrochemical device" or simply "functional layer") are used in electrochemical devices such as lithium ion secondary batteries. Specifically, electrodes that further include a functional layer formed on an electrode substrate in which an electrode mixed material layer is provided on a current collector and separators that include a functional layer formed on a separator substrate have been used as battery members.

In recent years, further improvements to compositions for electrochemical device functional layers (hereinafter, also referred to simply as "compositions for functional layers") that are used to form functional layers have been studied with the aim of further enhancing the performance of electrochemical devices such as lithium ion secondary batteries (refer to Patent Literature (PTL) 1 to 3).

### CITATION LIST

### Patent Literature

PTL 1: JP2023-523279A
PTL 2: JP2023-515152A
PTL 3: JP2016-183209A

### SUMMARY

### (Technical Problem)

From a viewpoint of improving electrochemical device productivity, it is preferable for a functional layer to display high adhesive strength at normal temperature (i.e., have excellent normal temperature adhesiveness). Moreover, from a viewpoint of enhancing electrochemical characteristics, it is preferable for an electrochemical device that includes a functional layer to have low internal resistance.

However, the conventional compositions for functional layers described above leave room for improvement in terms of achieving a good balance of normal temperature adhesiveness of a functional layer and reduction of internal resistance of an electrochemical device.

Accordingly, one object of the present disclosure is to provide a composition for an electrochemical device functional layer with which it is possible to form a functional layer for an electrochemical device that has excellent normal temperature adhesiveness and can reduce internal resistance of an electrochemical device.

Another object of the present disclosure is to provide a laminate for an electrochemical device that can reduce internal resistance of an electrochemical device.

Yet another object of the present disclosure is to provide an electrochemical device that has low internal resistance.

### (Solution to Problem)

The inventors conducted diligent investigation with the aim of solving the problem set forth above. The inventors made a new discovery that the problem set forth above can be solved with a composition for a functional layer that contains a particulate polymer having a volume-average particle diameter, an amount of elution into tetrahydrofuran as a film, and a storage modulus at 25°C that satisfy specific conditions, and, in this manner, the inventors completed the present disclosure.

Specifically, with the aim of advantageously solving the problem set forth above, the present disclosure provides compositions for electrochemical device functional layers according to the following {1} to {11}, a laminate for an electrochemical device according to the following {12}, and an electrochemical device according to the following {13}.
{1} A composition for an electrochemical device functional layer comprising a particulate polymer A, wherein the particulate polymer A has a volume-average particle diameter of not less than 0.75 µm and not more than 17.5 µm, the particulate polymer A has an amount of elution into tetrahydrofuran of not less than 0.05 mass% and not more than 60 mass%, and the particulate polymer A has a storage modulus at 25°C of 35 MPa or less.

A composition for a functional layer that contains a particulate polymer A having a volume-average particle diameter and an amount of elution into tetrahydrofuran (hereinafter, also referred to simply as an "amount of THF elution") that are within the ranges set forth above and having a storage modulus at 25°C that is not more than the value set forth above in this manner enables good production of a functional layer having excellent normal temperature adhesiveness. Moreover, this functional layer makes it possible to reduce internal resistance of an electrochemical device.

Note that the "volume-average particle diameter" referred to in the present disclosure means the "particle diameter (D50) at which, in a particle size distribution (by volume) measured by laser diffraction, cumulative volume calculated from a small diameter end of the distribution reaches 50%" and can be measured by a method described in the EXAMPLES section of the present specification.

The "amount of THF elution" and "storage modulus at 25°C" of the particulate polymer A referred to in the present disclosure can also be measured by methods described in the EXAMPLES section of the present specification.

{2} The composition for an electrochemical device functional layer according to the foregoing {1}, wherein a tetrahydrofuran eluting component of the particulate polymer A has a number-average molecular weight of not less than 500 and not more than 500,000.

When the number-average molecular weight of a tetrahydrofuran (THF) eluting component of the particulate polymer A is within the range set forth above, normal temperature adhesiveness of a functional layer can be even further increased, and internal resistance of an electrochemical device can be further reduced.

Note that the "number-average molecular weight of a THF eluting component" referred to in the present disclosure can be measured by a method described in the EXAMPLES section of the present specification.

{3} The composition for an electrochemical device functional layer according to the foregoing {1} or {2}, wherein the particulate polymer A has a glass-transition temperature of not lower than -50°C and not higher than 95°C.

When the glass-transition temperature of the particulate polymer A is within the range set forth above, blocking resistance of a functional layer can be improved while also even further increasing normal temperature adhesiveness of the functional layer.

Note that the "glass-transition temperature" of the particulate polymer A referred to in the present disclosure can be measured by a method described in the EXAMPLES section of the present specification.

{4} The composition for an electrochemical device functional layer according to any one of the foregoing {1} to {3}, wherein the particulate polymer A has a degree of swelling in electrolyte solution of not less than 100% and not more than 500%.

When the degree of swelling in electrolyte solution of the particulate polymer A is within the range set forth above, normal temperature adhesiveness of a functional layer can be even further increased, and internal resistance of an electrochemical device can be further reduced.

Note that the "degree of swelling in electrolyte solution" of the particulate polymer A referred to in the present disclosure can be measured by a method described in the EXAMPLES section of the present specification.

{5} The composition for an electrochemical device functional layer according to any one of the foregoing {1} to {4}, further comprising a dispersion medium including water, wherein the composition for an electrochemical device functional layer has a pH of not lower than 3.0 and not higher than 12.0.

When the pH of the composition for a functional layer is within the range set forth above, dispersibility of the composition for a functional layer can be improved, and normal temperature adhesiveness of a functional layer can be even further increased.

Note that the "pH" of the composition for a functional layer referred to in the present disclosure means the pH measured under a condition of a temperature of 25°C and can be measured by a method described in the EXAMPLES section of the present specification.

{6} The composition for an electrochemical device functional layer according to any one of the foregoing {1} to {5}, further comprising a particulate polymer B differing from the particulate polymer A and a dispersant, wherein a mass ratio of the particulate polymer A and the particulate polymer B, expressed as particulate polymer A/particulate polymer B, is not less than 1/99 and not more than 99/1.

Through a composition for a functional layer that further contains a particulate polymer B and a dispersant and in which a mass ratio of the particulate polymer A and the particulate polymer B is within the range set forth above, it is possible to even further increase normal temperature adhesiveness of a functional layer and further reduce internal resistance of an electrochemical device.

{7} The composition for an electrochemical device functional layer according to any one of the foregoing {1} to {6}, wherein the particulate polymer A includes an aromatic vinyl monomer unit in a proportion of 10 mass% or more.

When the proportion constituted by aromatic vinyl monomer units in the particulate polymer A is not less than the value set forth above, blocking resistance of a functional layer can be improved while also even further increasing normal temperature adhesiveness of the functional layer.

Note that a "monomer unit" of a polymer referred to in the present disclosure means a "repeating unit derived from the monomer that is included in a polymer obtained using that monomer". Also note that the proportional content of a monomer unit in a polymer can be measured by a nuclear magnetic resonance (NMR) method such as ¹H-NMR.

{8} The composition for an electrochemical device functional layer according to any one of the foregoing {1} to {7}, wherein the particulate polymer A includes a cross-linkable monomer unit in a proportion of not less than 0.01 mass% and not more than 50 mass%.

When the proportion constituted by cross-linkable monomer units in the particulate polymer A is within the range set forth above, normal temperature adhesiveness of a functional layer can be even further increased, and internal resistance of an electrochemical device can be further reduced.

{9} The composition for an electrochemical device functional layer according to any one of the foregoing {1} to {8}, wherein the particulate polymer A has a core-shell structure.

When the particulate polymer A has a core-shell structure, blocking resistance of a functional layer can be improved while also even further increasing normal temperature adhesiveness of the functional layer.

{10} The composition for an electrochemical device functional layer according to the foregoing {9}, wherein a mass ratio of a core portion and a shell portion of the core-shell structure, expressed as core portion/shell portion, is not less than 0.1/99.9 and not more than 99.9/0.1.

When the particulate polymer A has a core-shell structure in which the mass ratio of a core portion and a shell portion is within the range set forth above, blocking resistance of a functional layer can be improved while also even further increasing normal temperature adhesiveness of the functional layer.

{11} The composition for an electrochemical device functional layer according to any one of the foregoing {1} to {10}, further comprising non-conductive heat-resistant particles.

Through a composition for a functional layer that further contains non-conductive heat-resistant particles, it is possible to improve heat resistance of a functional layer.

{12} A laminate for an electrochemical device comprising: a substrate; and a functional layer for an electrochemical device formed on the substrate, wherein the functional layer for an electrochemical device is formed using the composition for an electrochemical device functional layer according to any one of the foregoing {1} to {11}.

A laminate for an electrochemical device (hereinafter, also referred to simply as a "laminate") that includes a functional layer formed using any one of the compositions for a functional layer set forth above can reduce internal resistance of an electrochemical device.

{13} An electrochemical device comprising the laminate for an electrochemical device according to the foregoing {12}.

An electrochemical device that includes the laminate set forth above has reduced internal resistance.

### (Advantageous Effect)

According to the present disclosure, it is possible to provide a composition for an electrochemical device functional layer with which it is possible to form a functional layer for an electrochemical device that has excellent normal temperature adhesiveness and can reduce internal resistance of an electrochemical device.

Moreover, according to the present disclosure, it is possible to provide a laminate for an electrochemical device that can reduce internal resistance of an electrochemical device.

Furthermore, according to the present disclosure, it is possible to provide an electrochemical device that has low internal resistance.

### DETAILED DESCRIPTION

The following provides a detailed description of embodiments of the present disclosure.

A presently disclosed composition for a functional layer can be used as a material in formation of a functional layer that is included in a presently disclosed laminate. Moreover, a feature of the presently disclosed laminate is that it includes a functional layer that has been formed using the presently disclosed composition for a functional layer. Furthermore, a presently disclosed electrochemical device includes the presently disclosed laminate. Note that a functional layer formed using the presently disclosed composition for a functional layer displays adhesive capability for adhering electrochemical device members to each other and may additionally have a function of improving heat resistance and strength of an electrochemical device member such as a separator or an electrode.

### (Composition for electrochemical device functional layer)

The presently disclosed composition for a functional layer contains a particulate polymer A and optionally further contains a particulate polymer B, a dispersion medium, a dispersant, non-conductive heat-resistant particles, and other components.

Features of the presently disclosed composition for a functional layer are that the particulate polymer A has a volume-average particle diameter and an amount of THF elution that are within specific ranges and that the particulate polymer A has a storage modulus at 25°C that is not more than a specific value.

Note that the presently disclosed composition for a functional layer does not normally contain an electrode active material.

As a result of the presently disclosed composition for a functional layer containing the particulate polymer A that satisfies the properties described above, it is possible to cause a functional layer to display excellent normal temperature adhesiveness and to reduce internal resistance of an electrochemical device by using the presently disclosed composition for a functional layer. Although it is not certain why the effects described above are achieved when using the presently disclosed composition for a functional layer, the reason is presumed to be as follows.

Firstly, the particulate polymer A that is contained in the presently disclosed composition for a functional layer has a comparatively large volume-average particle diameter of not less than 0.75 µm and not more than 17.5 µm. This makes it easy for the particulate polymer A to protrude relative to materials other than the particulate polymer A and come into contact with an electrochemical device member at a thickness direction surface of a functional layer that has been formed using the presently disclosed composition for a functional layer, and, as a result, adhesiveness of the functional layer can be improved. In addition, as a consequence of the particulate polymer A having a storage modulus at 25°C of 35 MPa or less and the particulate polymer A having an amount of THF elution of 0.05 mass% or more, the particulate polymer A readily deforms at normal temperature and can display good normal temperature adhesive strength at a contact surface with an electrochemical device member that is in contact with a functional layer formed using the presently disclosed composition for a functional layer.

Moreover, as a consequence of the particulate polymer A having an amount of THF elution of 60 mass% or less, the amount of the particulate polymer A that elutes into electrolyte solution is reduced, and an increase of internal resistance of an electrochemical device caused by eluted particulate polymer A adsorbing to the surface of an electrode active material or blocking pores of a separator can be suppressed. Furthermore, as a consequence of the particulate polymer A having a comparatively large volume-average particle diameter as previously described, pores of a separator are not easily blocked by particulate polymer A that has eluted into electrolyte solution, and an increase of internal resistance of an electrochemical device can be suppressed.

The above is considered to be the reason why normal temperature adhesiveness of a functional layer can be increased and internal resistance of an electrochemical device can be reduced by using the presently disclosed composition for a functional layer.

### <Particulate polymer A>

The particulate polymer A has a function of causing a functional layer that has been formed using the composition for a functional layer to display excellent adhesiveness. The term "particulate polymer" refers to a polymer that is dispersible in an aqueous medium such as water and that is present in the form of particles in the aqueous medium. The particulate polymer A is normally water-insoluble.

Note that when particles are said to be "water-insoluble" in the present disclosure, this means that when 0.5 g of polymer is dissolved in 100 g of water at a temperature of 25°C, insoluble content is 90 mass% or more.

No specific limitations are placed on the chemical composition of the particulate polymer A so long as the conditions relating to volume-average particle diameter, amount of THF elution, and storage modulus described above are satisfied. In particular, the particulate polymer A preferably includes at least a cross-linkable monomer unit, and more preferably includes an aromatic vinyl monomer unit and a cross-linkable monomer unit. Note that the particulate polymer A may include monomer units other than an aromatic vinyl monomer unit and a cross-linkable monomer unit (hereinafter, referred to as "other monomer units").

### <<Aromatic vinyl monomer unit>>

Examples of aromatic vinyl monomers that can form an aromatic vinyl monomer unit include styrene, α-methylstyrene, p-t-butylstyrene, butoxystyrene, vinyltoluene, chlorostyrene, and vinylnaphthalene. One of these aromatic vinyl monomers may be used individually, or two or more of these aromatic vinyl monomers may be used in combination. Of these aromatic vinyl monomers, styrene is preferable.

The proportion constituted by aromatic vinyl monomer units in the particulate polymer A when all monomer units in the particulate polymer A are taken to be 100 mass% is preferably 10 mass% or more, more preferably 11.5 mass% or more, and even more preferably 13 mass% or more, and is preferably 99 mass% or less, more preferably 90 mass% or less, even more preferably 80 mass% or less, further preferably 70 mass% or less, and particularly preferably 60 mass% or less. When the proportion constituted by aromatic vinyl monomer units in the particulate polymer A is not less than any of the lower limits set forth above, the glass-transition temperature of the particulate polymer A rises, and blocking resistance of a functional layer can be improved. Moreover, when the proportion constituted by aromatic vinyl monomer units in the particulate polymer A is not more than any of the upper limits set forth above, normal temperature adhesiveness of a functional layer can be even further increased.

### <<Cross-linkable monomer unit>>

Examples of cross-linkable monomers that can form a cross-linkable monomer unit include cross-linkable monomers including a thermally cross-linkable group and also including one olefinic double bond per molecule; and cross-linkable monomers including two or more olefinic double bonds per molecule.

Examples of thermally cross-linkable groups include an epoxy group, an N-methylolamide group, an oxetanyl group, an oxazoline group, and combinations thereof. Of these groups, an epoxy group is preferable.

Examples of cross-linkable monomers that include an epoxy group as a thermally cross-linkable group and that also include an olefinic double bond include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid.

Examples of cross-linkable monomers that include an N-methylolamide group as a thermally cross-linkable group and that also include an olefinic double bond include methylol group-containing (meth)acrylamides such as N-methylol (meth)acrylamide.

Note that in the present disclosure, "(meth)acryl" is used to indicate "acryl" and/or "methacryl".

Examples of cross-linkable monomers that include an oxetanyl group as a thermally cross-linkable group and that also include an olefinic double bond include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane.

Examples of cross-linkable monomers that include an oxazoline group as a thermally cross-linkable group and that also include an olefinic double bond include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of cross-linkable monomers that include two or more olefinic double bonds per molecule include butadiene, isoprene, allyl (meth)acrylate, ethylene glycol di(meth)acrylate, diethylene glycol di(meth)acrylate, triethylene glycol di(meth)acrylate, tetraethylene glycol di(meth)acrylate, trimethylolpropane tri(meth)acrylate, dipropylene glycol diallyl ether, polyglycol diallyl ether, triethylene glycol divinyl ether, hydroquinone diallyl ether, tetraallyloxyethane, trimethylolpropane diallyl ether, allyl or vinyl ethers of polyfunctional alcohols other than those already described, triallylamine, methylenebisacrylamide, and divinylbenzene.

Note that in the present disclosure, "(meth)acrylate" is used to indicate "acrylate" and/or "methacrylate".

One of the cross-linkable monomers described above may be used individually, or two or more of the cross-linkable monomers described above may be used in combination. Of these cross-linkable monomers, ethylene glycol dimethacrylate and glycidyl methacrylate are preferable.

The proportion constituted by cross-linkable monomer units in the particulate polymer A when all monomer units in the particulate polymer A are taken to be 100 mass% is preferably 0.01 mass% or more, more preferably 0.05 mass% or more, even more preferably 0.5 mass% or more, and particularly preferably 1 mass% or more, and is preferably 50 mass% or less, more preferably 30 mass% or less, even more preferably 15 mass% or less, and particularly preferably 12 mass% or less. When the proportion constituted by cross-linkable monomer units in the particulate polymer A is not less than any of the lower limits set forth above, elution of the particulate polymer A into electrolyte solution can be inhibited, and internal resistance of an electrochemical device can be further reduced. Moreover, when the proportion constituted by cross-linkable monomer units in the particulate polymer A is not more than any of the upper limits set forth above, normal temperature adhesiveness of a functional layer can be even further increased.

### <<Other monomer units>>

Examples of other monomer units include a (meth)acrylic acid ester monomer unit. The particulate polymer A preferably includes a (meth)acrylic acid ester monomer unit as another monomer unit.

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, and 2-ethylhexyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, and 2-ethylhexyl methacrylate. One of these (meth)acrylic acid ester monomers may be used individually, or two or more of these (meth)acrylic acid ester monomers may be used in combination in a freely selected ratio. Of these examples, n-butyl acrylate and 2-ethylhexyl acrylate are preferable as (meth)acrylic acid ester monomers.

The proportion constituted by (meth)acrylic acid ester monomer units in the particulate polymer A when all monomer units in the particulate polymer A are taken to be 100 mass% is preferably 1 mass% or more, more preferably 10 mass% or more, even more preferably 20 mass% or more, and particularly preferably 29 mass% or more, and is preferably 95 mass% or less, more preferably 90 mass% or less, and even more preferably 85 mass% or less. When the proportion constituted by (meth)acrylic acid ester monomer units in the particulate polymer A is not less than any of the lower limits set forth above, normal temperature adhesiveness of a functional layer can be even further increased. Moreover, when the proportion constituted by (meth)acrylic acid ester monomer units in the particulate polymer A is not more than any of the upper limits set forth above, blocking resistance of a functional layer can be improved.

Note that the particulate polymer A may be particles that are formed of one type of polymer (single-polymer particles) or may be particles that are formed of two or more types of polymers (composite-polymer particles). A composite-polymer particle is a heterophase structure where different polymer portions are present within the particle. In this context, a heterophase structure refers to a single particle formed by physical or chemical bonding of two or more different polymers, and not to a particle having a monophase structure formed by a single polymer such as a block polymer. Specific examples of the heterophase structure include a core-shell structure that is a spherical particle where a core portion and a shell portion at least partially covering an outer surface of the core portion are formed from different polymers; and a side-by-side structure that is a structure where two or more polymers are arranged alongside one another. Of these structures, it is preferable for the particulate polymer A to have a core-shell structure from a viewpoint of improving blocking resistance of a functional layer while also even further increasing normal temperature adhesiveness of the functional layer.

### <<Core-shell structure>>

In the particulate polymer A having a core-shell structure, the shell portion may completely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion. Accordingly, a particulate polymer A that includes a shell portion having pores passing from an outer surface of the shell portion (i.e., a circumferential surface of the particulate polymer A) to an outer surface of a core portion corresponds to a particulate polymer A in which a shell portion partially covers the outer surface of a core portion.

Note that the particulate polymer A having a core-shell structure may include any constituent element other than the core portion and the shell portion described above so long as the expected effects are not significantly lost. Specifically, the particulate polymer A may, for example, include a portion inside of the core portion that is formed of a different polymer to the core portion. In one specific example, a seed particle may remain inside of the core portion in a situation in which seed particles are used in production of the core portion by seeded polymerization. However, from a viewpoint of more noticeably displaying the expected effects, it is preferable that the particulate polymer A is composed of only the core portion and the shell portion.

### [Core portion]

Although no specific limitations are placed on monomer units that are included in a polymer of the core portion, an aromatic vinyl monomer unit and a cross-linkable monomer unit are preferable. Note that the polymer of the core portion may include just one type of monomer unit or may include a plurality of types of monomer units.

### -Aromatic vinyl monomer unit-

Examples of aromatic vinyl monomers that can form an aromatic vinyl monomer unit in the polymer of the core portion include the same aromatic vinyl monomers as previously described. One of these aromatic vinyl monomers may be used individually, or a plurality of these aromatic vinyl monomers may be used in combination. Of these aromatic vinyl monomers, styrene is preferable.

The proportion constituted by aromatic vinyl monomer units included in the polymer of the core portion when all monomer units included in the polymer of the core portion are taken to be 100 mass% is preferably 1 mass% or more, more preferably 2 mass% or more, even more preferably 3 mass% or more, and particularly preferably 4 mass% or more, and is preferably 99 mass% or less, more preferably 90 mass% or less, even more preferably 75 mass% or less, and particularly preferably 60 mass% or less. When the proportion constituted by aromatic vinyl monomer units in the polymer of the core portion is not less than any of the lower limits set forth above, the glass-transition temperature of the polymer of the core portion rises, and blocking resistance of a functional layer can be improved. Moreover, when the proportion constituted by aromatic vinyl monomer units in the polymer of the core portion is not more than any of the upper limits set forth above, normal temperature adhesiveness of a functional layer can be even further increased.

### -Cross-linkable monomer unit-

Examples of cross-linkable monomers that can form a cross-linkable monomer unit in the polymer of the core portion include the same cross-linkable monomers as previously described. One of these cross-linkable monomers may be used individually, or a plurality of these cross-linkable monomers may be used in combination. Of these cross-linkable monomers, ethylene glycol dimethacrylate and glycidyl methacrylate are preferable.

The proportion constituted by cross-linkable monomer units included in the polymer of the core portion when all monomer units included in the polymer of the core portion are taken to be 100 mass% is preferably 0.01 mass% or more, more preferably 0.1 mass% or more, even more preferably 0.5 mass% or more, and particularly preferably 1 mass% or more, and is preferably 40 mass% or less, more preferably 30 mass% or less, even more preferably 20 mass% or less, and particularly preferably 15 mass% or less. When the proportion constituted by cross-linkable monomer units in the polymer of the core portion is not less than any of the lower limits set forth above, elution of the particulate polymer A into electrolyte solution can be inhibited, and internal resistance of an electrochemical device can be further reduced. Moreover, when the proportion constituted by cross-linkable monomer units in the polymer of the core portion is not more than any of the upper limits set forth above, normal temperature adhesiveness of a functional layer can be even further increased.

### -Other monomer units-

Although no specific limitations are placed on monomer units other than an aromatic vinyl monomer unit and a cross-linkable monomer unit (i.e., other monomer units) that can be included in the polymer of the core portion, one example thereof is a (meth)acrylic acid ester monomer unit.

Examples of (meth)acrylic acid ester monomers that can form a (meth)acrylic acid ester monomer unit in the polymer of the core portion include the same (meth)acrylic acid ester monomers as previously described. One of these (meth)acrylic acid ester monomers may be used individually, or a plurality of these (meth)acrylic acid ester monomers may be used in combination. Of these (meth)acrylic acid ester monomers, n-butyl acrylate and 2-ethylhexyl acrylate are preferable.

The proportion constituted by (meth)acrylic acid ester monomer units included in the polymer of the core portion when all monomer units included in the polymer of the core portion are taken to be 100 mass% is preferably 1 mass% or more, more preferably 10 mass% or more, even more preferably 20 mass% or more, and particularly preferably 30 mass% or more, and is preferably 99 mass% or less, more preferably 97 mass% or less, and even more preferably 95 mass% or less. When the proportion constituted by (meth)acrylic acid ester monomer units included the polymer of the core portion is not less than any of the lower limits set forth above, normal temperature adhesiveness of a functional layer can be even further increased. Moreover, when the proportion constituted by (meth)acrylic acid ester monomer units included in the polymer of the core portion is not more than any of the upper limits set forth above, blocking resistance of a functional layer can be improved.

### [Shell portion]

Although no specific limitations are placed on monomer units included in a polymer of the shell portion, an aromatic vinyl monomer unit is preferable. Note that the polymer of the shell portion may include just one type of monomer unit or may include a plurality of types of monomer units.

### -Aromatic vinyl monomer unit-

Examples of aromatic vinyl monomers that can form an aromatic vinyl monomer unit in the polymer of the shell portion include the same aromatic vinyl monomers as previously described. One of these aromatic vinyl monomers may be used individually, or a plurality of these aromatic vinyl monomers may be used in combination. Of these aromatic vinyl monomers, styrene is preferable.

The proportion constituted by aromatic vinyl monomer units included in the polymer of the shell portion when all monomer units included in the polymer of the shell portion are taken to be 100 mass% is preferably 30 mass% or more, more preferably 50 mass% or more, even more preferably 70 mass% or more, further preferably 90 mass% or more, and particularly preferably 100 mass% (i.e., it is particularly preferable that the polymer of the shell portion only includes aromatic vinyl monomer units). When the proportion constituted by aromatic vinyl monomer units in the polymer of the shell portion is not less than any of the lower limits set forth above, the glass-transition temperature of the polymer of the shell portion rises, and blocking resistance of a functional layer can be improved.

### -Other monomer units-

Although no specific limitations are placed on monomer units other than an aromatic vinyl monomer unit (i.e., other monomer units) that can be included in the polymer of the shell portion, examples thereof include a cross-linkable monomer unit and a (meth)acrylic acid ester monomer unit such as previously described.

In a case in which the particulate polymer A has a core-shell structure, a mass ratio of the core portion and the shell portion (core portion/shell portion) is preferably 0.1/99.9 or more, more preferably 1/99 or more, even more preferably 10/90 or more, and particularly preferably 50/50 or more, and is preferably 99.9/0.1 or less, more preferably 99/1 or less, and even more preferably 95/5 or less. When the mass ratio of the core portion and the shell portion is not less than any of the lower limits set forth above, normal temperature adhesiveness of a functional layer can be even further increased. Moreover, when the mass ratio of the core portion and the shell portion is not more than any of the upper limits set forth above, blocking resistance of a functional layer can be improved.

### <<Properties of particulate polymer A>>

### [Volume-average particle diameter]

The particulate polymer A that is used in the present disclosure is required to have a volume-average particle diameter of not less than 0.75 µm and not more than 17.5 µm. The volume-average particle diameter of the particulate polymer A is preferably 1 µm or more, more preferably 1.5 µm or more, even more preferably 2.5 µm or more, and particularly preferably 3 µm or more, and is preferably 15 µm or less, more preferably 12 µm or less, and even more preferably 10 µm or less. When the volume-average particle diameter of the particulate polymer A is 0.75 µm, or more, normal temperature adhesiveness of a functional layer can be increased, and internal resistance of an electrochemical device can be reduced. On the other hand, when the volume-average particle diameter of the particulate polymer A is 17.5 µm or less, blocking resistance of a functional layer can be improved.

Note that the volume-average particle diameter of the particulate polymer A can be adjusted by altering the type and amount of a metal hydroxide that is used in production of the particulate polymer A and also the production method and production conditions of the particulate polymer A.

### [Amount of THF elution]

The particulate polymer A is required to have an amount of THF elution of not less than 0.05 mass% and not more than 60 mass%. The amount of THF elution is preferably 0.1 mass% or more, more preferably 0.5 mass% or more, even more preferably 1 mass% or more, further preferably 5 mass% or more, and particularly preferably 10 mass% or more, and is preferably 50 mass% or less, more preferably 47 mass% or less, and even more preferably 45 mass% or less. When the amount of THF elution of the particulate polymer A is 0.05 mass% or more, normal temperature adhesiveness of a functional layer can be increased. Moreover, when the amount of THF elution of the particulate polymer A is 60 mass% or less, elution of the particulate polymer A into electrolyte solution can be inhibited, and internal resistance of an electrochemical device can be reduced.

Note that the amount of THF elution of the particulate polymer A can be adjusted by altering the type and/or amount of a cross-linkable monomer that is used to produce the particulate polymer A, for example. Specifically, the amount of THF elution is reduced by increasing the amount of a cross-linkable monomer that is used to produce the particulate polymer A and is increased by reducing the amount of the cross-linkable monomer.

### [Storage modulus]

The particulate polymer A is required to have a storage modulus at 25°C of 35 MPa or less. The storage modulus at 25°C is preferably less than 30 MPa, more preferably 20 MPa or less, even more preferably 10 MPa or less, and particularly preferably 5 MPa or less, and is preferably 0.05 MPa or more, and more preferably 0.1 MPa or more. When the storage modulus at 25°C of the particulate polymer A is 35 MPa or less, normal temperature adhesiveness of a functional layer can be increased. Moreover, when the storage modulus at 25°C of the particulate polymer A is 0.05 MPa or more, blocking resistance of a functional layer can be improved, and internal resistance of an electrochemical device can be further reduced.

Note that the storage modulus of the particulate polymer A can be adjusted by altering the types and/or amounts of monomers that are used to produce the particulate polymer A, for example.

### [Number-average molecular weight of THF eluting component]

The number-average molecular weight of a THF eluting component of the particulate polymer A is preferably 500 or more, more preferably 750 or more, even more preferably 1,000 or more, further preferably 2,500 or more, and particularly preferably 5,000 or more, and is preferably 500,000 or less, more preferably 400,000 or less, even more preferably 300,000 or less, and particularly preferably 200,000 or less. When the number-average molecular weight of the THF eluting component of the particulate polymer A is not less than any of the lower limits set forth above, elution of the particulate polymer A into electrolyte solution can be inhibited, and normal temperature adhesiveness of a functional layer can be even further increased. Moreover, when the number-average molecular weight of the THF eluting component of the particulate polymer A is not more than any of the upper limits set forth above, increased electrolyte solution viscosity can be inhibited, and internal resistance of an electrochemical device can be further reduced.

Note that the number-average molecular weight of the THF eluting component of the particulate polymer A can be adjusted by altering the production method and production conditions of the particulate polymer A, for example.

### [Glass-transition temperature]

The glass-transition temperature of the particulate polymer A is preferably -50°C or higher, more preferably -45°C or higher, and even more preferably -40°C or higher, and is preferably 95°C or lower, more preferably 80°C or lower, even more preferably 60°C or lower, further preferably 40°C or lower, and particularly preferably 25°C or lower. When the glass-transition temperature of the particulate polymer A is not lower than any of the lower limits set forth above, blocking resistance of a functional layer can be improved. Moreover, when the glass-transition temperature of the particulate polymer A is not higher than any of the upper limits set forth above, normal temperature adhesiveness of a functional layer can be even further increased.

Note that the glass-transition temperature of the particulate polymer A can be adjusted by altering the types and/or amounts of monomers that are used to produce the particulate polymer A, for example.

### [Degree of swelling in electrolyte solution]

The degree of swelling in electrolyte solution of the particulate polymer A is preferably 100% or more, more preferably 125% or more, and even more preferably 150% or more, and is preferably 500% or less, more preferably 400% or less, even more preferably 300% or less, and particularly preferably 210% or less. When the degree of swelling in electrolyte solution of the particulate polymer A is not less than any of the lower limits set forth above, normal temperature adhesiveness of a functional layer can be even further increased. Moreover, when the degree of swelling in electrolyte solution of the particulate polymer A is not more than any of the upper limits set forth above, internal resistance of an electrochemical device can be further reduced.

Note that the degree of swelling in electrolyte solution of the particulate polymer A can be adjusted by altering the type and/or amount of a cross-linkable monomer that is used to produce the particulate polymer A, for example. Specifically, the degree of swelling in electrolyte solution is reduced by increasing the amount of a cross-linkable monomer that is used to produce the particulate polymer A and is increased by reducing the amount of the cross-linkable monomer.

### <<Production of particulate polymer A>>

The particulate polymer A can be produced by performing polymerization of a monomer composition containing the monomers described above in an aqueous solvent such as water, for example. The proportion constituted by each monomer in the monomer composition is normally the same as the proportion constituted by each monomer unit in the particulate polymer A.

The method of polymerization is not specifically limited and may be a suspension polymerization method, an emulsion polymerization and aggregation method, a pulverization method, or the like, for example. In particular, a suspension polymerization method and an emulsion polymerization and aggregation method are preferable, and a suspension polymerization method is more preferable. Moreover, the polymerization reaction can be a reaction such as radical polymerization or living radical polymerization.

Furthermore, other compounding agents such as chain transfer agents, polymerization regulators, polymerization reaction retardants, reactive fluidizers, fillers, flame retardants, antioxidants, and colorants can be compounded in any amount in the monomer composition that is used in production of the particulate polymer A.

The following describes a method of producing a particulate polymer A having a core-shell structure by suspension polymerization as one example.

### [Production of particulate polymer A by suspension polymerization]

### (1) Production of monomer composition for core portion formation

First, monomer(s) for forming a polymer of a core portion and other compounding agents that are added as necessary are mixed to produce a monomer composition for core portion formation.

### (2) Formation of droplets

Next, the monomer composition for core portion formation is dispersed in water, a polymerization initiator is added, and then droplets of the monomer composition for core portion formation are formed. No specific limitations are placed on the method by which the droplets are formed. For example, the droplets can be formed by using a disperser such as an emulsifying/dispersing device to perform shear stirring of the water containing the monomer composition.

The polymerization initiator may be an oil-soluble polymerization initiator such as t-butyl peroxy-2-ethylhexanoate or azobisisobutyronitrile, for example. The polymerization initiator may be added before droplet formation once the monomer composition has been dispersed in water or may be added to the monomer composition before dispersion thereof in water.

From a viewpoint of stabilizing droplets of the monomer composition that are formed in the water, it is preferable that a dispersion stabilizer is added to the water and that droplets of the monomer composition are then formed. The dispersion stabilizer may be sodium dodecylbenzenesulfonate, a metal hydroxide such as magnesium hydroxide, or the like, for example. The dispersion stabilizer may be added in the form of a colloidal dispersion liquid having the dispersion stabilizer dispersed in water, for example.

### (3) Polymerization

Once droplets of the monomer composition for core portion formation have been formed, the water containing the formed droplets is heated to initiate polymerization and thereby form a particulate polymer constituting a core portion in the water. A particulate polymer A having the core-shell structure described above can then be obtained by performing polymerization of monomer(s) for forming the shell portion in the presence of the particulate polymer constituting the core portion. Note that polymerization of monomer(s) for forming the shell portion can be performed by, for example, causing sedimentation of the particulate polymer constituting the core portion by centrifugal separation to obtain a wet cake, redispersing this wet cake in water, and subsequently adding a polymerization initiator and monomer(s) for shell portion formation and performing heating. The polymerization initiator that is used may be a water-soluble thermal radical polymerization initiator such as 2,2'-azobis(2-methylpropionamide) dihydrochloride, for example.

### <Particulate polymer B>

The particulate polymer B that can optionally be contained in the presently disclosed composition for a functional layer is a component that functions as a binder and is normally formed of a polymer having binding capacity. Through inclusion of the particulate polymer B in the composition for a functional layer, normal temperature adhesiveness of a functional layer can be even further increased. The particulate polymer B is a different component to the particulate polymer A described above and is preferably water-insoluble.

No specific limitations are placed on the particulate polymer B so long as it is different from the particulate polymer A described above and is a particulate polymer that is water-insoluble and can be dispersed in a dispersion medium such as water. For example, a conjugated diene polymer or an acrylic polymer can be used as the particulate polymer B. In particular, it is preferable to use an acrylic polymer. Moreover, the particulate polymer B differs from the particulate polymer A described above in terms of at least one of volume-average particle diameter, amount of elution into THF, and storage modulus at 25°C. In other words, the particulate polymer B does not satisfy at least one of the previously described physical property values (volume-average particle diameter, amount of elution in THF, and storage modulus at 25°C) that the particulate polymer A is required to satisfy.

Note that the term "conjugated diene polymer" refers to a polymer that includes a conjugated diene monomer unit. Specific examples of the conjugated diene polymer include, but are not specifically limited to, copolymers that include an aromatic vinyl monomer unit and an aliphatic conjugated diene monomer unit such as a styrene-butadiene copolymer (SBR), butadiene rubber (BR), acrylic rubber (NBR) (copolymer including an acrylonitrile unit and a butadiene unit), and hydrogenated products thereof.

The term "acrylic polymer" refers to a polymer that includes a (meth)acrylic acid ester monomer unit.

Note that one of these polymers may be used individually, or two or more of these polymers may be used in combination in a freely selected ratio.

The acrylic polymer that can preferably be used as the particulate polymer B may, for example, be a polymer that includes a cross-linkable monomer unit and a (meth)acrylic acid ester monomer unit such as previously described and that also includes an acid group-containing monomer unit described below, but is not specifically limited thereto.

Examples of acid group-containing monomers that can form an acid group-containing monomer unit include carboxy group-containing monomers, sulfo group-containing monomers, and phosphate group-containing monomers.

Examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

In the present specification, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present specification, "(meth)acryloyl" is used to indicate "acryloyl" and/or "methacryloyl".

One of the acid group-containing monomers described above may be used individually, or two or more of the acid group-containing monomers described above may be used in combination in a freely selected ratio. Of these examples, carboxy group-containing monomers are preferable, acrylic acid and methacrylic acid are more preferable, and methacrylic acid is even more preferable as an acid group-containing monomer.

Note that the proportion constituted by (meth)acrylic acid ester monomer units in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less. When the proportion constituted by (meth)acrylic acid ester monomer units in the acrylic polymer is not less than any of the lower limits set forth above, normal temperature adhesiveness of a functional layer can be even further increased. Moreover, when the proportion constituted by (meth)acrylic acid ester monomer units in the acrylic polymer is not more than any of the upper limits set forth above, blocking resistance of a functional layer can be improved.

The proportion constituted by acid group-containing monomer units in the acrylic polymer is preferably 0.1 mass% or more, more preferably 0.3 mass% or more, and even more preferably 0.5 mass% or more, and is preferably 20 mass% or less, more preferably 10 mass% or less, and even more preferably 5 mass% or less. When the proportion constituted by acid group-containing monomer units in the acrylic polymer is not less than any of the lower limits set forth above, dispersibility of the particulate polymer B in the composition for a functional layer and in a functional layer can be increased, and normal temperature adhesiveness of the functional layer can be even further increased. Moreover, when the proportion constituted by acid group-containing monomer units in the acrylic polymer is not more than any of the upper limits set forth above, residual water content of a functional layer can be reduced, and blocking resistance of the functional layer can be improved.

The proportion constituted by cross-linkable monomer units in the acrylic polymer is preferably 0.1 mass% or more, and more preferably 1 mass% or more, and is preferably 3 mass% or less, and more preferably 2.5 mass% or less. When the proportion constituted by cross-linkable monomer units in the acrylic polymer is not less than any of the lower limits set forth above, blocking resistance of a functional layer can be improved. Moreover, when the proportion constituted by cross-linkable monomer units in the acrylic polymer is not more than any of the upper limits set forth above, normal temperature adhesiveness of a functional layer can be even further increased.

The acrylic polymer may include monomer units other than a (meth)acrylic acid ester monomer unit, an acid group-containing monomer unit, and a cross-linkable monomer unit (i.e., other monomer units). Examples of other monomers that can form other monomer units that can be included in the acrylic polymer include aliphatic conjugated diene monomers such as 1,3-butadiene, 2-methyl-1,3-butadiene, 2,3-dimethyl-1,3-butadiene, and 2-chloro-1,3-butadiene; the previously described aromatic vinyl monomers; nitrile group-containing monomers such as acrylonitrile and methacrylonitrile; olefin monomers such as ethylene and propylene; halogen atom-containing monomers such as vinyl chloride and vinylidene chloride; vinyl ester monomers such as vinyl acetate, vinyl propionate, vinyl butyrate, and vinyl benzoate; vinyl ether monomers such as methyl vinyl ether, ethyl vinyl ether, and butyl vinyl ether; vinyl ketone monomers such as methyl vinyl ketone, ethyl vinyl ketone, butyl vinyl ketone, hexyl vinyl ketone, and isopropenyl vinyl ketone; and heterocycle-containing vinyl compound monomers such as N-vinylpyrrolidone, vinylpyridine, and vinylimidazole. Of these examples, nitrile group-containing monomers are preferable, and acrylonitrile is more preferable as another monomer.

Note that one of these other monomers may be used individually, or two or more of these other monomers may be used in combination in a freely selected ratio. The proportional content of other monomer units in the acrylic polymer may be adjusted as appropriate.

### <<Properties of particulate polymer B>>

### [Glass-transition temperature]

The glass-transition temperature (Tg) of the particulate polymer B is preferably -100°C or higher, more preferably -90°C or higher, and even more preferably -80°C or higher, and is preferably lower than 30°C, more preferably 20°C or lower, and even more preferably 15°C or lower.

When the glass-transition temperature of the particulate polymer B is not lower than any of the lower limits set forth above, normal temperature adhesiveness of a functional layer can be even further increased. Blocking resistance of the functional layer can also be improved. On the other hand, when the glass-transition temperature of the particulate polymer B is not higher than any of the upper limits set forth above, flexibility of a functional layer can be increased.

### [Volume-average particle diameter]

The volume-average particle diameter of the particulate polymer B is preferably 0.05 µm or more, and more preferably 0.1 µm or more, and is preferably less than 0.75 µm, and more preferably 0.5 µm or less. When the volume-average particle diameter of the particulate polymer B is 0.05 µm or more, dispersibility of the particulate polymer B can be increased. Moreover, when the volume-average particle diameter of the particulate polymer B is less than 0.75 µm, binding capacity of the particulate polymer B can be increased.

Note that the volume-average particle diameter of the particulate polymer B can be measured in the same way as the volume-average particle diameter of the particulate polymer A described above.

In a case in which the composition for a functional layer contains the particulate polymer B, a mass ratio of the particulate polymer A and the particulate polymer B (particulate polymer A/particulate polymer B) in the composition for a functional layer is preferably 1/99 or more, more preferably 5/95 or more, even more preferably 10/90 or more, and particularly preferably 50/50 or more, and is preferably 99/1 or less, more preferably 95/5 or less, and even more preferably 90/10 or less. When the mass ratio of the particulate polymer A and the particulate polymer B is not less than any of the lower limits set forth above, normal temperature adhesiveness of a functional layer can be even further increased. Moreover, when the mass ratio of the particulate polymer A and the particulate polymer B is not more than any of the upper limits set forth above, internal resistance of an electrochemical device can be further reduced.

In a case in which the composition for a functional layer further contains non-conductive heat-resistant particles described below, the content of the particulate polymer B in the composition for a functional layer is preferably 0.1 parts by mass or more, more preferably 0.2 parts by mass or more, even more preferably 0.5 parts by mass or more, and particularly preferably 3 parts by mass or more per 100 parts by mass of the non-conductive heat-resistant particles, and is preferably 20 parts by mass or less, more preferably 15 parts by mass or less, and even more preferably 10 parts by mass or less per 100 parts by mass of the non-conductive heat-resistant particles. When the content of the particulate polymer B is not less than any of the lower limits set forth above, normal temperature adhesiveness of a functional layer can be even further increased. On the other hand, when the content of the particulate polymer B is not more than any of the upper limits set forth above, internal resistance of an electrochemical device can be further reduced.

### <<Production of particulate polymer B>>

The particulate polymer B can be produced by, for example, performing polymerization of a monomer composition containing the monomers described above in an aqueous solvent such as water, for example, but is not specifically limited to being produced in this manner. The proportion constituted by each monomer in the monomer composition is normally the same as the proportion constituted by each monomer unit in the particulate polymer B.

No specific limitations are placed on the polymerization method and the polymerization reaction, and any of the polymerization methods and polymerization reactions that were previously described in relation to the polymerization method of the particulate polymer A, for example, can be adopted.

### <Dispersion medium>

The presently disclosed composition for a functional layer normally contains a dispersion medium. The dispersion medium may be water or an organic solvent such as an ester, a ketone, or an alcohol. One of these may be used individually, or two or more of these may be used in combination. In particular, water is preferable. In other words, the presently disclosed composition for a functional layer is preferably a slurry composition in which components such as the previously described particulate polymer A are dispersed in a dispersion medium including water. The proportion constituted by water among the dispersion medium when the total amount of the dispersion medium is taken to be 100 volume% is preferably 50 volume% or more, more preferably 70 volume% or more, even more preferably 90 volume% or more, further preferably 99 volume% or more, and particularly preferably 100 volume% (i.e., it is particularly preferable that the composition for a functional layer contains only water as the dispersion medium).

### <Dispersant>

The presently disclosed composition for a functional layer preferably further contains a dispersant. Through further inclusion of a dispersant in the composition for a functional layer, normal temperature adhesiveness of a functional layer can be even further increased.

The dispersant is preferably a polycarboxylic acid such as polyacrylic acid, polymethacrylic acid, or alginic acid. Note that the polycarboxylic acid may form a salt with an alkali metal, ammonia, or the like. Of these examples, polyacrylic acid and salts thereof are preferable. Note that one dispersant may be used individually, or two or more dispersants may be used in combination in a freely selected ratio.

In a case in which the composition for a functional layer contains a dispersant, the amount of the dispersant in the composition for a functional layer is preferably 0.1 parts by mass or more, more preferably 0.5 parts by mass or more, and even more preferably 1 part by mass or more relative to 100 parts by mass of the particulate polymer A, and is preferably 10 parts by mass or less, and more preferably 5 parts by mass or less relative to 100 parts by mass of the particulate polymer A. When the amount of the dispersant in the composition for a functional layer is not less than any of the lower limits set forth above, uneven distribution of the particulate polymer A and the particulate polymer B in a functional layer can be inhibited, and normal temperature adhesiveness of the functional layer can be even further increased. Moreover, when the amount of the dispersant in the composition for a functional layer is not more than any of the upper limits set forth above, internal resistance of an electrochemical device can be further reduced.

### <Non-conductive heat-resistant particles>

The presently disclosed composition for a functional layer preferably further contains non-conductive heat-resistant particles (hereinafter, also referred to as "heat-resistant particles"). Through further inclusion of heat-resistant particles in the composition for a functional layer, heat resistance of a functional layer can be improved.

The term "non-conductive heat-resistant particles" as used in the present specification refers to non-conductive fine particles having a heat-resistance temperature of 200°C or higher, and the term "heat-resistance temperature" refers to a temperature at which substantial physical change such as thermal deformation does not occur.

Although no specific limitations are placed on the heat-resistant particles so long as they are fine particles that have a heat-resistance temperature of 200°C or higher, that are electrochemically stable, and that are electrically insulating, the heat-resistant particles are preferably inorganic particles.

Since inorganic particles have a comparatively large specific gravity, it is easier for the particulate polymer A to protrude relative to the inorganic particles at a thickness direction surface of a functional layer when a composition for a functional layer containing the inorganic particles is applied onto a substrate to form a functional layer, for example, and this makes it possible to even further increase normal temperature adhesiveness of the functional layer.

The material of the inorganic particles is preferably an electrochemically stable material that is stably present in the environment of use of an electrochemical device. Examples include particles of oxides such as aluminum oxide (alumina), hydrous aluminum oxide (boehmite (AlOOH)), gibbsite (Al(OH)₃), silicon oxide, magnesium oxide (magnesia), magnesium hydroxide, calcium oxide, titanium oxide (titania), barium titanate (BaTiO₃), zirconium oxide (ZrO), and alumina-silica composite oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clays such as talc and montmorillonite. Of these materials, aluminum oxide, hydrous aluminum oxide (boehmite), magnesium hydroxide, and barium sulfate are more preferable, and aluminum oxide is even more preferable. These particles may be subjected to element substitution, surface treatment, solid solution treatment, or the like as necessary.

Note that one of these types of inorganic particles may be used individually, or two or more of these types of inorganic particles may be used in combination in a freely selected ratio.

### <<Volume-average particle diameter of heat-resistant particles>>

The volume-average particle diameter (D50) of the heat-resistant particles is preferably 0.1 µm or more, more preferably 0.2 µm or more, and even more preferably 0.25 µm or more, and is preferably 1.5 µm or less, more preferably 1.0 µm or less, and even more preferably 0.8 µm or less. When the volume-average particle diameter of the heat-resistant particles is not less than any of the lower limits set forth above, the heat-resistant particles are densely packed in a functional layer. Consequently, reduction of ion conductivity in the functional layer can be further inhibited, and electrochemical characteristics (particularly output characteristics) of an electrochemical device can be improved. On the other hand, when the volume-average particle diameter of the heat-resistant particles is not more than any of the upper limits set forth above, a functional layer can be caused to display excellent heat resistance even with a thin thickness, which makes it possible to increase the capacity of an electrochemical device.

Note that the volume-average particle diameter of the heat-resistant particles can be measured by laser diffraction.

### <<Mixing ratio of heat-resistant particles and particulate polymer A>>

A mixing ratio of the heat-resistant particles and the particulate polymer A in the composition for a functional layer, as a mass ratio (heat-resistant particles/particulate polymer A), is preferably 40/60 or more, more preferably 50/50 or more, and even more preferably 60/40 or more, and is preferably 99/1 or less, more preferably 90/10 or less, and even more preferably 80/20 or less.

When the mass ratio of the heat-resistant particles and the particulate polymer A is within any of the ranges set forth above, this results in a better balance of heat resistance and normal temperature adhesiveness of a functional layer.

### <Other components>

The presently disclosed composition for a functional layer may contain any other components besides the particulate polymer A, particulate polymer B, dispersion medium, dispersant, and heat-resistant particles described above. No specific limitations are placed on other components so long as they do not affect electrochemical reactions in an electrochemical device, and examples thereof include known additives such as thickeners (carboxymethyl cellulose, hydroxypropyl methylcellulose, etc.), wetting agents, and dispersion stabilizers (sodium dodecylbenzenesulfonate, etc.). One of these other components may be used individually, or two or more of these other components may be used in combination.

### <Properties of composition for functional layer>

### <<pH>>

In a case in which the presently disclosed composition for a functional layer contains water as a dispersion medium, the pH of the composition for a functional layer is preferably 3.0 or higher, more preferably 4.0 or higher, and even more preferably 5.0 or higher, and is preferably 12.0 or lower, more preferably 10.0 or lower, and even more preferably 9.0 or lower. When the pH of the composition for a functional layer is not lower than any of the lower limits set forth above, normal temperature adhesiveness of a functional layer can be even further increased. Moreover, when the pH of the composition for a functional layer is not higher than any of the upper limits set forth above, hydrolysis of a thickener such as carboxymethyl cellulose can be inhibited, and dispersibility of the composition for a functional layer can be improved.

Note that the pH of the composition for a functional layer can be adjusted through addition of a known acidic compound or basic compound.

### <Production method of composition for functional layer>

The composition for a functional layer can be produced by mixing the particulate polymer A described above with the particulate polymer B, dispersion medium, dispersant, heat-resistant particles, and other components that are used as necessary, for example, but is not specifically limited to being produced in this manner. Note that in a case in which the particulate polymer A or the particulate polymer B is produced through polymerization of a monomer composition in an aqueous solvent, the particulate polymer A or particulate polymer B may be mixed with other components while still in the form of a water dispersion. Moreover, in a case in which the particulate polymer A or the particulate polymer B is mixed in the form of a water dispersion, water in the water dispersion may be used as the dispersion medium.

Although no specific limitations are placed on the mixing method of these components, the mixing is preferably performed using a disperser as a mixing device in order to efficiently disperse the components. The disperser is preferably a device that can homogeneously disperse and mix the components. Examples of dispersers that can be used include a ball mill, a sand mill, a pigment disperser, a grinding machine, an ultrasonic disperser, a homogenizer, and a planetary mixer.

### (Laminate for electrochemical device)

The presently disclosed laminate is a laminate that includes a substrate and a functional layer formed on the substrate and in which the functional layer is formed using the presently disclosed composition for a functional layer. As a result of the presently disclosed laminate including a functional layer that has been formed using the composition for a functional layer set forth above, the presently disclosed laminate can reduce internal resistance of an electrochemical device.

### <Substrate>

No specific limitations are placed on the substrate. For example, a separator substrate can be used as the substrate in a case in which the functional layer is used as a member that constitutes part of a separator and an electrode substrate obtained by forming an electrode mixed material layer on a current collector can be used as the substrate in a case in which the functional layer is used as a member that constitutes part of an electrode. No specific limitations are placed on the use the laminate obtained by forming the functional layer on the substrate using the composition for a functional layer. For example, the functional layer may be formed on a separator substrate or the like, and the resultant laminate may be used in that form as an electrochemical device member such as a separator, or the functional layer may be formed on an electrode substrate, and the resultant laminate may be used in that form as an electrode.

### <<Separator substrate>>

No specific limitations are placed on the separator substrate on which the functional layer is formed and any of those described in JP2012-204303A, for example, can be used. Of these separator substrates, a microporous membrane made of polyolefinic (polyethylene, polypropylene, polybutene, or polyvinyl chloride) resin is preferable because such a membrane can reduce the total thickness of a separator, which increases the ratio of electrode active material in an electrochemical device, and thereby increases the volumetric capacity. Note that the separator substrate may include, as part thereof, any layer other than the functional layer that can display an expected function.

### <<Electrode substrate>>

The electrode substrate (positive electrode substrate or negative electrode substrate) is not specifically limited and may, for example, be an electrode substrate obtained by forming an electrode mixed material layer on a current collector. The current collector, an electrode active material (positive electrode active material or negative electrode active material) and a binder for an electrode mixed material layer (binder for a positive electrode mixed material layer or binder for a negative electrode mixed material layer) in the electrode mixed material layer, and the method by which the electrode mixed material layer is formed on the current collector can be known examples thereof such as any of those described in JP2013-145763A, for example. Note that the electrode substrate may include, as part thereof, any layer other than the functional layer that has an expected function.

### <Functional layer>

The functional layer can be formed on the substrate described above using the presently disclosed composition for a functional layer. The functional layer contains at least the particulate polymer A described above and optionally contains the particulate polymer B, dispersant, heat-resistant particles, and other components. Note that components contained in the functional layer are components that were contained in the composition for a functional layer set forth above and that the preferred ratio of these components is the same as the preferred ratio of the components in the composition for a functional layer.

### <<Formation method of functional layer>>

Examples of methods by which the functional layer may be formed on the substrate using the composition for a functional layer include, but are not specifically limited to:
(1) a method in which the composition for a functional layer is applied onto the surface of the substrate described above and is then dried;
(2) a method in which the substrate described above is immersed in the composition for a functional layer and is then dried; and
(3) a method in which the composition for a functional layer is applied onto a releasable substrate and is dried to form a functional layer that is then transferred onto the surface of the substrate described above.

Note that the functional layer may be formed on just one side of the substrate or may be formed on both sides of the substrate.

Known releasable substrates can be used as the releasable substrate without any specific limitations.

Of these methods, method (1) is preferable because it is easy to control the thickness of the functional layer. Moreover, method (1) may, for example, include a step of applying the composition for a functional layer onto the substrate (application step) and a step of drying the composition for a functional layer that has been applied onto the substrate to form a functional layer (functional layer formation step).

### [Application step]

Examples of methods by which the composition for a functional layer can be applied onto the substrate in the application step include, but are not specifically limited to, doctor blading, reverse roll coating, direct roll coating, gravure coating, extrusion coating, and brush coating.

### [Functional layer formation step]

The composition for a functional layer on the substrate can be dried by any commonly known method without any specific limitations in the functional layer formation step. Examples of drying methods that may be used include drying by warm, hot, or low-humidity air; drying in a vacuum; and drying by irradiation with infrared light, an electron beam, or the like. Although no specific limitations are placed on the drying conditions, the drying temperature is preferably not lower than 50°C and not higher than 150°C, and the drying time is preferably not less than 1 minute and not more than 30 minutes.

The presently disclosed composition for a functional layer set forth above may be a first composition for a functional layer that contains the particulate polymer A but does not contain heat-resistant particles or may be a second composition for a functional layer that further contains heat-resistant particles in addition to the particulate polymer A. In a case in which the first composition for a functional layer is used to form the functional layer on the substrate, it is possible to obtain an adhesive layer as the functional layer. Moreover, in a case in which the second composition for a functional layer is used to form the functional layer on the substrate, it is possible to obtain, as the functional layer, a single layer that simultaneously exhibits a function of a heat-resistant layer that increases heat resistance of the substrate and a function of an adhesive layer that strongly adheres members to each other.

A laminate that includes a functional layer formed using the second composition for a functional layer provides high productivity since it can be produced with reduced man-hours and time as compared to a conventional substrate including a heat-resistant layer and an adhesive layer.

### <<Thickness of functional layer>>

The thickness of the functional layer formed using the presently disclosed composition for an electrochemical device functional layer is preferably 0.5 µm or more, and is preferably 5 µm or less. When the thickness of the functional layer is not less than the lower limit set forth above, normal temperature adhesiveness of the functional layer can be even further increased. Moreover, when the thickness of the functional layer is not more than the upper limit set forth above, blocking resistance of the functional layer can be improved.

### (Electrochemical device)

The presently disclosed electrochemical device includes an electrode and a separator, and a feature thereof is that the presently disclosed electrochemical device includes the presently disclosed laminate set forth above as at least one of the electrode and the separator. The presently disclosed electrochemical device has low internal resistance as a result of the presently disclosed laminate set forth above being used as at least one device member among the electrode and the separator.

The presently disclosed electrochemical device may be, but is not specifically limited to, a lithium ion secondary battery, an electric double-layer capacitor, or a lithium ion capacitor, for example, and is preferably a lithium ion secondary battery.

Although the following gives a lithium ion secondary battery as one example of the presently disclosed electrochemical device and describes a case in which the presently disclosed laminate set forth above is used as a separator of the lithium ion secondary battery, the presently disclosed electrochemical device is not limited to the example described below.

### <Positive electrode and negative electrode>

Electrodes that are formed of known electrode substrates (positive electrode substrate and negative electrode substrate) such as previously described in the "Substrate" section can be used as a positive electrode and a negative electrode.

### <Electrolyte solution>

An organic electrolyte solution obtained by dissolving a supporting electrolyte in an organic solvent is normally used as an electrolyte solution. The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that may suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used.

Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used. The concentration of the electrolyte in the electrolyte solution can be adjusted as appropriate. Furthermore, known additives may be added to the electrolyte solution.

### <Production method of electrochemical device>

No specific limitations are placed on the method by which the presently disclosed electrochemical device is produced. For example, the lithium ion secondary battery described above as one example of the presently disclosed electrochemical device can be produced by stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one member among the positive electrode, the negative electrode, and the separator is the presently disclosed laminate. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Measurements and evaluations of various attributes in the examples and comparative examples were performed as follows.

### <Volume-average particle diameter of particulate polymer A>

A water dispersion containing a particulate polymer A produced in each example or comparative example was taken into a beaker such that there was 0.1 g of solid content, and 0.1 mL of alkylbenzenesulfonic acid aqueous solution (produced by FUJIFILM Corporation; product name: DRIWEL) was added thereto. In addition, 10 mL to 30 mL of a diluent (produced by Beckman Coulter, Inc.; product name: ISOTON II) was further added into the beaker, and 3 minutes of dispersing was performed by a 20 W (Watt) ultrasonic disperser to obtain a measurement sample. Thereafter, a particle size analyzer (produced by Beckman Coulter, Inc.; product name: Multisizer) was used to obtain a particle diameter distribution (by volume) of the measurement sample under conditions of an aperture diameter of 20 µm, a medium of ISOTON II, and a measured particle count of 100,000. The volume-average particle diameter was determined as the particle diameter (D50) at which, in the obtained particle diameter distribution, cumulative volume calculated from a small diameter end of the distribution reached 50%.

### <Glass-transition temperature>

A water dispersion containing a particulate polymer A produced in each example or comparative example was dried, and the resultant powdered sample was taken to be a measurement sample. The measurement sample was weighed into an aluminum pan in an amount of 10 mg and was measured by a differential scanning calorimeter (produced by SII NanoTechnology Inc.; product name: EXSTAR DSC6220) under conditions prescribed in JIS Z 8703 with a measurement temperature range of -100°C to 500°C and a heating rate of 10°C/min to obtain a differential scanning calorimetry (DSC) curve. Note that an empty aluminum pan was used as a reference. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

### <Storage elastic modulus>

A water dispersion containing a particulate polymer A produced in each example or comparative example was weighed into an aluminum cup having a bottom area of 5.3 cm² such that there was 0.48 g of solid content and was air dried. After the air drying, a film of 70 µm to 80 µm in thickness that was formed of the particulate polymer A was obtained. The obtained film was punched out with a diameter of 12 mm to obtain a measurement sample. Note that in the case of a sample that was present as a powder without forming a film after air drying, approximately 0.1 g of the powder after air drying was weighed into a tablet molding machine with a diameter of 12 mm and was pressed at 9 kN for 10 seconds to mold a tablet (12 mm (diameter) × 75 µm (thickness)), and this tablet was taken to be a measurement sample. A viscoelasticity measurement apparatus (produced by Anton Paar GmbH; product name: MCR 302) was used as a dynamic viscoelasticity measurement apparatus to measure the storage modulus (MPa) at 25°C with a strain of 0.01% and a frequency of 1 Hz using parallel plates (diameter: 8 mm).

### <Degree of swelling in electrolyte solution>

A water dispersion containing a particulate polymer A produced in each example or comparative example was dripped into a petri dish made of polytetrafluoroethylene such that there was 1.0 g of solid content and was dried at 25°C for 48 hours to prepare a film. Note that in the case of a particulate polymer A having a glass-transition temperature of 25°C or higher, 0.2 ± 0.05 g of the sample after drying described above was pressed at a temperature of 200°C and a pressure of 5 MPa for 2 minutes to prepare a film. The prepared film was cut up to obtain film pieces of 1.5 mm-square, and 0.2 ± 0.05 g of these film pieces were precisely weighed. The mass of the precisely weighed film pieces was taken to be WO. Next, the precisely weighed film pieces were immersed in 50 mL of electrolyte solution at 60°C for 72 hours. Thereafter, the film pieces were pulled up from the electrolyte solution, electrolyte solution on the surface of the film pieces was wiped off, and the mass W1 of the film pieces (mass of film pieces after immersion test) was measured. The measured weights WO and W1 were used to calculate the degree of swelling in electrolyte solution S (%) as S = (W1/WO) × 100. Note that a solution obtained by adding 2 volume% (solvent ratio) of vinylene carbonate to a mixed solvent of ethylene carbonate (EC) and ethyl methyl carbonate (EMC) (weight mixing ratio: EC/EMC = 3/7) and dissolving LiPF₆ as a supporting electrolyte with a concentration of 1 mol/L was used as the electrolyte solution.

### <Amount of THF elution>

A water dispersion containing a particulate polymer A produced in each example or comparative example was dripped into a petri dish such that there was 1.5 g of solid content, was dried in a 23°C to 27°C environment for 24 hours, and was then further dried at 110°C for 1 hour to prepare a film. Note that in the case of a particulate polymer A having a glass-transition temperature of 25°C or higher, 0.2 ± 0.05 g of the sample after drying described above was pressed at a temperature of 200°C and a pressure of 5 MPa for 2 minutes to prepare a film. The prepared film was cut up to obtain film pieces of 2.0 mm to 3.0 mm-square, and 0.3 ± 0.05 g of these film pieces were precisely weighed. The mass of the precisely weighed film pieces was taken to be W2. Next, the precisely weighed film pieces were immersed in 80 mL of tetrahydrofuran (THF) at 25°C for 24 hours. Thereafter, the film pieces were pulled up from the THF, the pulled-up film pieces were vacuum dried at 105°C for 3 hours, and the mass (mass of insoluble content) W3 thereof was measured. The amount of THF elution (%) was calculated according to the following formula.$Amount of THF elution \left(%\right) = \left(W2 - W3\right) / W 2 \times 100$

### <Number-average molecular weight of THF eluting component>

In measurement of "Amount of THF elution" described above, the THF after immersion of the film pieces was collected and was dried. Resin obtained through drying was collected, 2 mg of the collected resin was dissolved in 5 g of THF, and 0.2 g of cyclohexane was added thereto to obtain a measurement sample. The number-average molecular weight of a THF eluting component of the particulate polymer A was measured by performing gel permeation chromatography (GPC). The GPC measurement conditions were as indicated below. In preparation of a calibration curve, standard polystyrene (TSKgel^{®} (TSKgel is a registered trademark in Japan, other countries, or both) standard Polystyrene) was used, and the number-average molecular weight was determined.
Apparatus: HLC-8320 (produced by Tosoh Corporation)
Column: TSKgel SuperH2000 (internal diameter: 6 mm; length: 150 mm; pore diameter: 2 nm), TSKgel SuperH4000 (internal diameter: 6 mm; length: 150 mm; pore diameter: 20 nm), TSKgel SuperH5000 (internal diameter: 6 mm; length: 150 mm; pore diameter: 65 nm) (each produced by Tosoh Corporation)
Detector: Differential refractometer HLC-8320 (produced by Tosoh Corporation)

### <pH>

The pH at 25°C of a composition for a functional layer produced in each example or comparative example was measured using a benchtop pH meter (produced by Horiba, Ltd.; product name: LAQUA-PH-SE).

### <Blocking resistance>

A microporous membrane (thickness: 12 µm) made of polyethylene was prepared as a separator substrate. A composition for a functional layer produced in each example or comparative example was applied onto one side of this separator substrate by bar coating. Next, the separator substrate with the composition for a functional layer applied thereon was dried at 50°C for 10 minutes to produce a functional layer-equipped separator (laminate) including a functional layer of 2.0 µm in thickness at one side of the separator substrate. This functional layer-equipped separator was taken to be a separator for evaluation. Two 10 mm × 50 mm strips were cut out from the separator for evaluation. The two separators for evaluation that had been cut out were overlapped with the respective functional layers thereof facing each other to obtain a pre-pressing test specimen. This pre-pressing test specimen was placed inside of laminate packaging and, together with the packaging, was hot pressed for 5 minutes with a temperature of 40°C and a load of 6.0 MPa using a flat plate press. The post-pressing test specimen was taken out of the packaging, and cellophane tape was affixed to the surface at one side of the test specimen. Tape prescribed by JIS Z1522 was used as the cellophane tape. Moreover, the cellophane tape was fixed to a horizontal test stage in advance. The stress when a separator was peeled off by pulling one end of the separator vertically upward at a pulling speed of 50 mm/min was measured. Three measurements were made in this manner. An average value of the measured values was determined as the peel strength P1 (N/m) and was evaluated by the following standard. A smaller peel strength P1 indicates better blocking resistance.
A: Separator detaches before peel strength test
B: Peel strength P1 of less than 0.2 N/m
C: Peel strength P1 of not less than 0.2 N/m and less than 0.5 N/m
D: Peel strength P1 of 0.5 N/m or more

### <Normal temperature adhesiveness>

A microporous membrane (thickness: 12 µm) made of polyethylene was prepared as a separator substrate. A composition for a functional layer produced in each example or comparative example was applied onto one side of this separator substrate by bar coating. Next, the separator substrate with the composition for a functional layer applied thereon was dried at 50°C for 10 minutes to produce a functional layer-equipped separator (laminate) including a functional layer of 2.0 µm in thickness at one side of the separator substrate. This functional layer-equipped separator was taken to be a separator for evaluation. A 10 mm × 50 mm strip was cut out from the separator for evaluation. The surface of a negative electrode (surface at the negative electrode mixed material layer-side) produced in each example or comparative example was arranged along the surface of the functional layer of the cut-out separator for evaluation to obtain a pre-pressing test specimen. The pre-pressing test specimen was placed inside of laminate packaging and, together with the packaging, was hot pressed for 1 minute with a temperature of 25°C and a load of 1.0 MPa using a flat plate press. The post-pressing test specimen was taken out of the packaging, this test specimen was arranged with the surface at the current collector-side of the negative electrode facing downward, and cellophane tape was affixed to the surface at the current collector-side of the negative electrode. Tape prescribed by JIS Z1522 was used as the cellophane tape. Moreover, the cellophane tape was fixed to a horizontal test stage in advance. The stress when the separator was peeled off by pulling one end of the separator vertically upward at a pulling speed of 50 mm/min was measured. Three measurements were made in this manner. An average value of the measured values was determined as the peel strength P2 and was evaluated by the following standard. A larger peel strength P2 indicates better normal temperature adhesiveness.
A: Peel strength P2 of 2.0 N/m or more
B: Peel strength P2 of not less than 0.5 N/m and less than 2.0 N/m
C: Peel strength P2 of less than 0.5 N/m
D: Separator detaches before peel strength test

### <Internal resistance>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C (C is a value expressed by rated capacity (mA)/1 hour (hr)) constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging (upper limit cell voltage 4.20 V) was performed by a 0.2C constant-current method and CC discharging was performed to 3.00 V by a 0.2C constant-current method. This charging and discharging at 0.2C was repeated three times.

Thereafter, the lithium ion secondary battery was charged to an SOC (State Of Charge) of 50% at 1C in a 25°C atmosphere and was then subjected to 15 seconds of charging and 15 seconds of discharging at each of 0.5C, 1.0C, 1.5C, and 2.0C, centered on an SOC of 50%. The battery voltage after 0.1 seconds in each case (charging side and discharging side) was plotted against the current value, and the gradient of this plot was determined as the IV resistance (Ω) (IV resistance during charging and IV resistance during discharging). The obtained IV resistance value (Ω) was evaluated by the following standard. A smaller IV resistance value indicates less internal resistance and lower direct current resistance.
A: IV resistance of 5 Ω or less
B: IV resistance of more than 5 Ω and not more than 6 Ω
C: IV resistance of more than 6 Ω and not more than 7.5 Ω
D: IV resistance of more than 7.5 Ω

### (Example 1)

### <Production of water dispersion containing particulate polymer A>

### [Production of monomer composition]

A monomer composition was produced by mixing 20.6 parts of styrene as an aromatic vinyl monomer, 0.5 parts of ethylene glycol dimethacrylate and 10.0 parts of glycidyl methacrylate as cross-linkable monomers, and 58.9 parts of 2-ethylhexyl acrylate as a (meth)acrylic acid ester monomer.

### [Production of colloidal dispersion liquid]

A colloidal dispersion liquid containing magnesium hydroxide as a metal hydroxide was produced by gradually adding an aqueous solution of 7.0 parts of sodium hydroxide dissolved in 50 parts of deionized water to an aqueous solution of 10.0 parts of magnesium chloride dissolved in 200 parts of deionized water under stirring.

### [Formation of core portion]

A particulate polymer A was produced by suspension polymerization. Specifically, the monomer composition described above was added to the colloidal dispersion liquid containing magnesium hydroxide, was further stirred therewith, and then 2.0 parts of t-butyl peroxy-2-ethylhexanoate (produced by NOF Corporation; product name: PERBUTYL O) was added as a polymerization initiator to yield a mixture. The obtained mixture was subjected to 1 minute of high-shear stirring at a rotation speed of 12,000 rpm using an inline emulsifying/dispersing device (produced by Pacific Machinery & Engineering Co., Ltd.; product name: CAVITRON) so as to form droplets of the monomer composition in the colloidal dispersion liquid containing magnesium hydroxide. The magnesium hydroxide-containing colloidal dispersion liquid in which droplets of the monomer composition had been formed was loaded into a reactor, the temperature was raised to 90°C, and a polymerization reaction was performed for 5 hours to yield a water dispersion of a particulate polymer constituting a core portion.

### [Formation of shell portion]

A hydroxypropyl methylcellulose aqueous solution was produced by dissolving 0.5 parts of hydroxypropyl methylcellulose in 420 parts of deionized water at room temperature. The water dispersion containing the particulate polymer constituting the core portion that had been obtained by suspension polymerization described above was subjected to centrifugal separation (10,000 rpm, 10 minutes, 25°C), and a wet cake of sedimented polymer was collected. The obtained wet cake was added to the hydroxypropyl methylcellulose aqueous solution described above in an amount such that solid content of the wet cake was 15.5 parts and was stirred at room temperature for 30 minutes to cause redispersion. With respect to the dispersion liquid after redispersion, 0.15 parts of 2,2'-azobis(2-methylpropionamide) dihydrochloride as a polymerization initiator and 1.72 parts of styrene as an aromatic vinyl monomer were added (wet cake/styrene (mass ratio) = 90/10), the temperature was raised to 70°C, and a polymerization reaction was performed for 6 hours to yield a water dispersion containing a particulate polymer A having a core-shell structure.

This water dispersion containing the particulate polymer A was used to measure the volume-average particle diameter, the glass-transition temperature, the storage modulus, the degree of swelling in electrolyte solution, the amount of THF elution, and the number-average molecular weight of a THF eluting component. The results are shown in Table 1.

### <Production of water dispersion containing particulate polymer B>

A reactor including a stirrer was supplied with 70 parts of deionized water, 0.15 parts of sodium lauryl sulfate (produced by Kao Corporation; product name: EMAL^{®} 2F (EMAL is a registered trademark in Japan, other countries, or both)) as an emulsifier, and 0.5 parts of ammonium persulfate as a polymerization initiator. The gas phase was purged with nitrogen gas, and the temperature was raised to 60°C.

Meanwhile, a monomer composition was produced in a separate vessel by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acid group-containing monomer, 2 parts of acrylonitrile as a nitrile group-containing monomer, and 1 part of allyl methacrylate and 1 part of allyl glycidyl ether as cross-linkable monomers.

The obtained monomer composition was continuously added over 4 hours into the reactor including a stirrer described above to perform polymerization. The reaction was carried out at 60°C during the addition. After the addition was complete, stirring was carried out for a further 3 hours at 70°C, and then the reaction was ended to yield a water dispersion containing a particulate polymer B. The obtained particulate polymer B had a volume-average particle diameter of 0.25 µm and a glass-transition temperature of -40°C.

### <Production of composition for functional layer>

A pre-mixing slurry was obtained by adding 0.5 parts of sodium polyacrylate as a dispersant to 70 parts of alumina (produced by Sumitomo Chemical Co., Ltd.; product name: AKP3000; volume-average particle diameter: 0.7 µm) as heat-resistant particles, adjusting the solid content concentration to 55% through addition of deionized water, and mixing these materials using a ball mill.

In addition, 20 parts in terms of solid content of the water dispersion containing the particulate polymer A, 5 parts in terms of solid content of the water dispersion containing the particulate polymer B, 1.5 parts of carboxymethyl cellulose as a thickener, and 0.2 parts of sodium dodecylbenzenesulfonate (NEOPELEX G-15 produced by Kao Corporation) as a dispersion stabilizer were mixed, and then the resultant mixture (particulate polymer A/particulate polymer B (mass ratio) = 80/20) was added to the pre-mixing slurry described above. Deionized water was further added to adjust the solid content concentration to 40%, and then 3% sodium hydroxide aqueous solution was used to adjust the pH to 7.0 and yield a composition for a functional layer.

This composition for a functional layer was used to produce a functional layer-equipped separator (laminate) including a functional layer at one side of a separator substrate and to evaluate blocking resistance and normal temperature adhesiveness. The results are shown in Table 1.

### <Production of functional layer-equipped separator (laminate)>

A microporous membrane (thickness: 12 µm) made of polyethylene was prepared as a separator substrate. The composition for a functional layer obtained as described above was applied onto one side of this separator substrate by bar coating. Next, the separator substrate with the composition for a functional layer applied thereon was dried at 50°C for 10 minutes to form a functional layer. The same operations were performed with respect to the other side of the separator substrate to produce a functional layer-equipped separator (laminate) that included functional layers each having a thickness of 2.0 µm at both sides of the separator substrate.

### <Production of positive electrode>

A slurry composition for a positive electrode was produced by mixing 100 parts of LiCoO₂ (volume-average particle diameter: 12 µm) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 µm in thickness serving as a current collector by a comma coater such as to have a thickness after drying of approximately 150 µm. The slurry composition for a positive electrode was dried by conveying the aluminum foil inside of a 60°C oven for 2 minutes at a speed of 0.5 m/min. Thereafter, 2 minutes of heat treatment was performed at 120°C to obtain a pre-pressing positive electrode web. This pre-pressing positive electrode web was rolled by roll pressing to obtain a positive electrode including a positive electrode mixed material layer (thickness: 60 µm).

### <Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing the desired binder for a negative electrode mixed material layer.

After compounding 80 parts of artificial graphite (volume-average particle diameter: 15.6 µm) as a negative electrode active material (1) and 16 parts of a silicon-based active material SiOx (volume-average particle diameter: 4.9 µm) as a negative electrode active material (2), and then mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and then a further 15 minutes of mixing was performed at 25°C to obtain a mixture. Deionized water and 1.5 parts in terms of solid content of the water dispersion containing the binder for a negative electrode mixed material layer were added to this mixture, the final solid content concentration was adjusted to 52%, and a further 10 minutes of mixing was performed to yield a mixture. This mixture was subjected to defoaming under reduced pressure to yield a slurry composition for a negative electrode having good fluidity.

The slurry composition for a negative electrode was applied onto copper foil of 20 µm in thickness serving as a current collector by a comma coater such as to have a thickness after drying of approximately 150 µm. The slurry composition for a negative electrode was dried by conveying the copper foil inside of a 60°C oven for 2 minutes at a speed of 0.5 m/min. Thereafter, 2 minutes of heat treatment was performed at 120°C to obtain a pre-pressing negative electrode web. This pre-pressing negative electrode web was rolled by roll pressing to obtain a negative electrode including a negative electrode mixed material layer (thickness: 80 µm).

### <Production of lithium ion secondary battery>

An aluminum packing case was prepared as a battery case. The positive electrode obtained as described above was cut out as a 4 cm × 4 cm square and was arranged with the surface at the current collector-side in contact with the aluminum packing case. The functional layer-equipped separator obtained as described above was cut out as a 4.4 cm × 4.4 cm square and was arranged on the surface of the positive electrode mixed material layer of the positive electrode with a functional layer of the separator facing toward the positive electrode. The negative electrode obtained as described above was cut out as a 4.2 cm × 4.2 cm square and was arranged on the separator such that the surface at the negative electrode mixed material layer-side faced toward the separator. The resultant laminate was wound by a winding machine to obtain a roll. This roll was pressed at 50°C and 1 MPa to obtain a flattened roll, the flattened roll was subsequently enclosed in the aluminum packing case serving as a battery case, and electrolyte solution (solvent: mixed solvent of ethylene carbonate/ethyl methyl carbonate (weight ratio) = 3/7; additive: containing 2 volume% (solvent ratio) of vinylene carbonate; supporting electrolyte: LiPF₆ of 1 mol/L in concentration) was injected into the aluminum packing case such that no air remained. An opening of the aluminum packing case was closed by heat sealing at a temperature of 150°C to produce a lithium ion secondary battery.

This lithium ion secondary battery was used to evaluate internal resistance. The result is shown in Table 1.

### (Example 2)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 1 with the exception that in production of the water dispersion containing the particulate polymer A, the amount of magnesium chloride was changed from 10.0 parts to 5.9 parts, and the amount of sodium hydroxide was changed from 7.0 parts to 4.1 parts. Evaluations were conducted in the same manner as in Example 1. The results are shown in Table 1.

### (Example 3)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 1 with the exception that in production of the water dispersion containing the particulate polymer A, the amount of magnesium chloride was changed from 10.0 parts to 6.5 parts, and the amount of sodium hydroxide was changed from 7.0 parts to 4.6 parts. Evaluations were conducted in the same manner as in Example 1. The results are shown in Table 1.

### (Example 4)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 1 with the exception that in production of the water dispersion containing the particulate polymer A, the amount of magnesium chloride was changed from 10.0 parts to 8.5 parts, and the amount of sodium hydroxide was changed from 7.0 parts to 6.0 parts. Evaluations were conducted in the same manner as in Example 1. The results are shown in Table 1.

### (Example 5)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 1 with the exception that in production of the water dispersion containing the particulate polymer A, the amount of magnesium chloride was changed from 10.0 parts to 11.0 parts, and the amount of sodium hydroxide was changed from 7.0 parts to 7.7 parts. Evaluations were conducted in the same manner as in Example 1. The results are shown in Table 1.

### (Example 6)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 1 with the exception that in production of the water dispersion containing the particulate polymer A, a 15% sodium dodecylbenzenesulfonate aqueous solution was used instead of the colloidal dispersion liquid containing magnesium hydroxide as a metal hydroxide. Evaluations were conducted in the same manner as in Example 1. The results are shown in Table 1.

### (Examples 7 to 12 and 14 to 21)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 1 with the exception that in production of the water dispersion containing the particulate polymer A, the additive amounts of monomers were changed as indicated in Tables 1 and 2. Evaluations were conducted in the same manner as in Example 1. The results are shown in Tables 1 and 2.

### (Example 13)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 1 with the exception that in production of the water dispersion containing the particulate polymer A, the additive amounts of monomers were changed as indicated in Table 2, and 1 part of tert-dodecyl mercaptan was used as a chain transfer agent. Evaluations were conducted in the same manner as in Example 1. The results are shown in Table 2.

### (Example 22)

A water dispersion containing a particulate polymer B, a composition for a functional layer, a functional layer-equipped separator, a positive electrode, a negative electrode, and a lithium ion secondary battery were prepared or produced in the same way as in Example 1 with the exception that a water dispersion containing a particulate polymer A that was produced as described below was used. Evaluations were conducted in the same manner as in Example 1. The results are shown in Table 3.

### <Production of water dispersion containing particulate polymer A>

A monomer composition was produced by mixing 41 parts of styrene as an aromatic vinyl monomer, 1.2 parts of ethylene glycol dimethacrylate and 10 parts of glycidyl methacrylate as cross-linkable monomers, and 47.8 parts of 2-ethylhexyl acrylate as a (meth)acrylic acid ester monomer.

The monomer composition described above was added into and further stirred with an aqueous solution containing 6.2 parts in terms of solid content of polyvinyl alcohol having a degree of polymerization of 3,000 to 4,000, and then 2.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 12,000 rpm using an inline emulsifying/dispersing device (CAVITRON produced by Pacific Machinery & Engineering Co., Ltd.) so as to form droplets of the monomer composition. The mixture in which droplets of the monomer composition had been formed was loaded into a reactor, the temperature was raised to 90°C, and a polymerization reaction was performed for 5 hours to yield a water dispersion containing a particulate polymer A that was single-polymer particles.

### (Examples 23 to 25)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 22 with the exception that in production of the water dispersion containing the particulate polymer A, the additive amounts of monomers were changed as indicated in Table 3. Evaluations were conducted in the same manner as in Example 1. The results are shown in Table 3.

### (Example 26)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 24 with the exception that in production of the water dispersion containing the particulate polymer A, the amount of polyvinyl alcohol was changed from 6.2 parts to 7.8 parts. Evaluations were conducted in the same manner as in Example 1. The results are shown in Table 3.

### (Example 27)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 24 with the exception that in production of the water dispersion containing the particulate polymer A, the amount of polyvinyl alcohol was changed from 6.2 parts to 5.1 parts. Evaluations were conducted in the same manner as in Example 1. The results are shown in Table 3.

### (Example 28)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 24 with the exception that in production of the water dispersion containing the particulate polymer A, the amount of polyvinyl alcohol was changed from 6.2 parts to 2.4 parts. Evaluations were conducted in the same manner as in Example 1. The results are shown in Table 3.

### (Comparative Examples 1 and 2)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 1 with the exception that in production of the water dispersion containing the particulate polymer A, the additive amounts of monomers were changed as indicated in Table 4. Evaluations were conducted in the same manner as in Example 1. The results are shown in Table 4.

### (Comparative Example 3)

A water dispersion containing a particulate polymer B, a composition for a functional layer, a functional layer-equipped separator, a positive electrode, a negative electrode, and a lithium ion secondary battery were prepared or produced in the same way as in Example 1 with the exception that a water dispersion containing a particulate polymer A that was produced as described below was used. Evaluations were conducted in the same manner as in Example 1. The results are shown in Table 4.

### <Production of water dispersion containing particulate polymer A>

A flask was charged with 20.6 parts of styrene as an aromatic vinyl monomer, 0.5 parts of ethylene glycol dimethacrylate and 10 parts of glycidyl methacrylate as cross-linkable monomers, 58.9 parts of 2-ethylhexyl acrylate as a (meth)acrylic acid ester monomer, 0.03 parts of sodium dodecylbenzenesulfonate as an emulsifier, 150 parts of deionized water, and 0.5 parts of potassium persulfate as a polymerization initiator. These materials were thoroughly stirred and were then heated to 60°C to initiate polymerization. Polymerization was continued until a polymerization conversion rate of 96% was reached to yield a water dispersion containing a particulate polymer constituting a core portion. Next, this water dispersion was heated to 70°C, and then 10 parts of styrene for shell portion formation was continuously added over 30 minutes to continue polymerization. At the point at which the polymerization conversion rate reached 96%, cooling was performed to quench the reaction to yield a water dispersion containing a particulate polymer A having a core-shell structure.

### (Comparative Example 4)

A water dispersion containing a particulate polymer A, a water dispersion containing a particulate polymer B, a composition for a functional layer, a functional layer-equipped separator, a positive electrode, a negative electrode, and a lithium ion secondary battery were prepared or produced in the same way as in Example 1 with the exception that in production of the water dispersion containing the particulate polymer A, the amount of magnesium chloride was changed from 10.0 parts to 3.9 parts, and the amount of sodium hydroxide was changed from 7.0 parts to 2.7 parts. Evaluations were conducted in the same manner as in Example 1. The results are shown in Table 4.

In Tables 1 to 4, shown below:
"ST" indicates styrene;
"EDMA" indicates ethylene glycol dimethacrylate;
"GMA" indicates glycidyl methacrylate;
"2EHA" indicates 2-ethylhexyl acrylate;
"BA" indicates n-butyl acrylate; and
"TDM" indicates tert-dodecyl mercaptan.

**[Table 1]**

| | | | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|---|
| Composition for functional layer | Particulate polymer A | Core portion | Aromatic vinyl monomer | ST [parts by mass] | 20.6 | 20.6 | 20.6 | 20.6 | 20.6 | 20.6 | - | 14 | 9 | 19.2 | 29 |
| | | | Cross-linkable monomer | EDMA [parts by mass] | 0.5 | 0.5 | 0.5 | 0.5 | 0.5 | 0.5 | 30 | 10 | 1 | 0.8 | 0.05 |
| | | | | GMA [parts by mass] | 10 | 10 | 10 | 10 | 10 | 10 | 1 | 1 | 10 | 5 | 0.95 |
| | | | (Meth)acrylic acid ester monomer | 2EHA [parts by mass] | 58.9 | 58.9 | 58.9 | 58.9 | 58.9 | 58.9 | 59 | 65 | 70 | 65 | 60 |
| | | | | BA [parts by mass] | - | - | - | - | - | - | - | - | - | - | - |
| | | | Chain transfer agent | TDM [parts bv mass] | - | - | - | - | - | - | - | - | - | - | - |
| | | Shell portion | Aromatic vinyl monomer | ST [parts by mass] | 10 | 10 | 10 | 10 | 10 | 10 | 10 | 10 | 10 | 10 | 10 |
| | | Core portion/shell portion (mass ratio) | | | 90/10 | 90/10 | 90/10 | 90/10 | 90/10 | 90/10 | 90/10 | 90/10 | 90/10 | 90/10 | 90/10 |
| | | Volume-average particle diameter [µm] | | | 4.5 | 15 | 10 | 6 | 3 | 1 | 4.5 | 4.5 | 4.5 | 4.5 | 4.5 |
| | | Amount of THF elution [mass%] | | | 40 | 40 | 40 | 40 | 40 | 40 | 0.1 | I | 10 | 25 | 45 |
| | | Storage modulus at 25°C [MPa] | | | 0.2 | 0.2 | 0.2 | 0.2 | 0.2 | 0.2 | 30 | 20 | 1 | 0.5 | 0.1 |
| | | Number-average molecular weight of THF eluting component [-] | | | 25,000 | 25,000 | 25,000 | 25,000 | 25,000 | 25,000 | 500 | 1,000 | 5,000 | 10,000 | 200,000 |
| | | Glass-transition temperature [°C] | | | -20 | -20 | -20 | -20 | -20 | -20 | -40 | -20 | -20 | -20 | -20 |
| | | Degree of swelling in electrolyte solution [%] | | | 200 | 200 | 200 | 200 | 200 | 200 | 100 | 150 | 200 | 200 | 210 |
| | pH [-] | | | | 7.0 | 7.0 | 7.0 | 7.0 | 7.0 | 7.0 | 7.0 | 7.0 | 7.0 | 7.0 | 7.0 |
| | Particulate polymer A/particulate polymer B (mass ratio) | | | | 80/20 | 80/20 | 80/20 | 80/20 | 80/20 | 80/20 | 80/20 | 80/20 | 80/20 | 80/20 | 80/20 |
| Evaluation | | Internal resistance | | | A | B | A | A | A | A | A | A | A | A | A |
| | | Normal temperature adhesiveness | | | A | A | A | A | A | C | C | B | A | A | A |
| | | Blocking resistance | | | A | C | A | A | A | A | A | A | A | A | A |

**[Table 2]**

| | | | | | Example 12 | Example 13 | Example 14 | Example 15 | Example 16 | Example 17 | Example 18 | Example 19 | Example 20 | Example 21 |
|---|---|---|---|---|---|---|---|---|---|---|---|---|---|---|
| Composition for functional layer | Particulate polymer A | Core portion | Aromatic vinyl monomer | ST [parts by mass] | 29.5 | 3.99 | 3.99 | 22.5 | 33.5 | 50 | 72.89 | 88 | - | - |
| | | | Cross-linkable monomer | EDMA [parts by mass] | 0.01 | 0.01 | 0.01 | 0.5 | 0.5 | 0.5 | 0.01 | 0.01 | 1 | 1 |
| | | | | GMA [parts by mass] | 0.49 | 1 | 1 | 10 | 10 | 10 | 0.1 | 0.01 | 1 | 1 |
| | | | (Meth)acrylic acid ester monomer | 2EHA [parts bv mass] | 60 | 85 | 85 | 57 | 46 | 29.5 | 17 | 1.98 | 44 | - |
| | | | | BA [parts bv mass] | - | - | - | - | - | - | - | - | 44 | 88 |
| | | | Chain transfer agent | TDM [parts bv mass] | - | 1 | - | - | - | - | - | - | - | - |
| | | Shell portion | Aromatic vinyl monomer | ST [parts bv mass] | 10 | 10 | 10 | 10 | 10 | 10 | 10 | 10 | 10 | 10 |
| | | Core portion/shell portion (mass ratio) | | | 90/10 | 90/10 | 90/10 | 90/10 | 90/10 | 90/10 | 90/10 | 90/10 | 90/10 | 90/10 |
| | | Volume-average particle diameter [µm] | | | 4.5 | 4.5 | 4.5 | 4.5 | 4.5 | 4.5 | 4.5 | 4.5 | 4.5 | 4.5 |
| | | Amount of THF elution [mass%] | | | 50 | 45 | 45 | 40 | 40 | 40 | 47 | 50 | 50 | 50 |
| | | Storage modulus at 25°C [MPa] | | | 0.05 | 0.01 | 0.1 | 0.5 | 1.0 | 5 | 10 | 30 | 0.1 | 0.1 |
| | | Number-average molecular weight of THF eluting component [-] | | | 500,000 | 200,000 | 200,000 | 25,000 | 25,000 | 25,000 | 350,000 | 500,000 | 500,000 | 500,000 |
| | | Glass-transition temperature [°C] | | | -20 | -50 | -40 | -10 | 0 | 25 | 60 | 95 | -50 | -45 |
| | | Degree of swelling in electrolyte solution [%] | | | 210 | 150 | 150 | 200 | 200 | 200 | 250 | 300 | 400 | 500 |
| | pH [-] | | | | 7.0 | 7.0 | 7.0 | 7.0 | 7.0 | 7.0 | 7.0 | 7.0 | 7.0 | 7.0 |
| | Particulate polymer A/particulate polymer B (mass ratio) | | | | 80/20 | 80/20 | 80/20 | 80/20 | 80/20 | 80/20 | 80/20 | 80/20 | 80/20 | 80/20 |
| Evaluation | | Internal resistance | | | C | B | A | A | A | A | B | C | C | C |
| | | Normal temperature adhesiveness | | | A | A | A | A | A | A | A | C | A | A |
| | | Blocking resistance | | | B | B | A | A | A | A | A | A | C | B |

**[Table 3]**

| | | | | | Example 22 | Example 23 | Example 24 | Example 25 | Example 26 | Example 27 | Example 28 |
|---|---|---|---|---|---|---|---|---|---|---|---|
| Composition for functional layer | Particulate polymer A | Single-polymer particles | Aromatic vinyl monomer | ST [parts by mass] | 41 | 53 | 64 | 74 | 64 | 64 | 64 |
| | | | Cross-linkable monomer | EDMA [parts by mass] | 1.2 | 1.2 | 1.2 | 1.2 | 1.2 | 1.2 | 1.2 |
| | | | | GMA [parts by mass] | 10 | 10 | 10 | 10 | 10 | 10 | 10 |
| | | | (Meth)acrylic acid ester monomer | 2EHA [parts bv mass] | 47.8 | 35.8 | 24.8 | 14.8 | 24.8 | 24.8 | 24.8 |
| | | | | BA [parts by mass] | - | - | - | - | - | - | - |
| | | | Chain transfer agent | TDM [parts by mass] | - | - | - | - | - | - | - |
| | | Core portion/shell portion (mass ratio) | | | - | - | - | - | - | - | - |
| | | Volume-average particle diameter [µm] | | | 4.5 | 4.5 | 4.5 | 4.5 | 2.3 | 6.0 | 8.0 |
| | | Amount of THF elution [mass%] | | | 40 | 43 | 43 | 45 | 43 | 43 | 43 |
| | | Storage modulus at 25°C [MPa] | | | 0.05 | 0.5 | 1.0 | 4.5 | 1.0 | 1.1 | 1.3 |
| | | Number-average molecular weight of THF eluting component [-] | | | 40,000 | 34,000 | 30,000 | 28,000 | 36,000 | 36,000 | 36,000 |
| | | Glass-transition temperature [°C] | | | -20 | 0 | 20 | 40 | 20 | 20 | 20 |
| | | Degree of swelling in electrolyte solution [%] | | | 200 | 200 | 200 | 200 | 200 | 200 | 200 |
| | pH [-] | | | | 7.0 | 7.0 | 7.0 | 7.0 | 7.0 | 7.0 | 7.0 |
| | Particulate polymer A/particulate polymer B (mass ratio) | | | | 80/20 | 80/20 | 80/20 | 80/20 | 80/20 | 80/20 | 80/20 |
| Evaluation | | Internal resistance | | | B | A | A | A | A | A | A |
| | | Normal temperature adhesiveness | | | B | B | B | B | B | B | B |
| | | Blocking resistance | | | B | B | A | A | A | B | B |

**[Table 4]**

| | | | | | Comparative Example 1 | Comparative Example 2 | Comparative Example 3 | Comparative Example 4 |
|---|---|---|---|---|---|---|---|---|
| Composition for functional layer | Particulate polymer A | Core portion | Aromatic vinyl monomer | ST [parts by mass] | 21.1 | 50 | 20.6 | 20.6 |
| | | | Cross-linkable monomer | EDMA [parts by mass] | - | 0.1 | 0.5 | 0.5 |
| | | | | GMA [parts by mass] | 10 | 5 | 10 | 10 |
| | | | (Meth)acrylic acid ester monomer | 2EHA [parts bv mass] | 58.9 | - | 58.9 | 58.9 |
| | | | | BA [parts by mass] | - | 34.9 | - | - |
| | | | Chain transfer agent | TDM [parts by mass] | | | | |
| | | Shell portion | Aromatic vinyl monomer | ST [parts by mass] | 10 | 10 | 10 | 10 |
| | | Core portion/shell portion (mass ratio) | | | 90/10 | 90/10 | 90/10 | 90/10 |
| | | Volume-average particle diameter [µm] | | | 4.5 | 4.5 | 0.5 | 20 |
| | | Amount of THF elution [mass%] | | | 80 | 40 | 40 | 40 |
| | | Storage modulus at 25°C [MPa] | | | 0.1 | 40 | 0.2 | 0.2 |
| | | Number-average molecular weight of THF eluting component [-] | | | 500,000 | 100,000 | 10,000 | 25,000 |
| | | Glass-transition temperature [°C] | | | -20 | 60 | -20 | -20 |
| | | Degree of swelling in electrolyte solution [%] | | | 200 | 400 | 200 | 200 |
| | pH [-] | | | | 7.0 | 7.0 | 7.0 | 7.0 |
| | Particulate polymer A/particulate polymer B (mass ratio) | | | | 80/20 | 80/20 | 80/20 | 80/20 |
| Evaluation | | Internal resistance | | | D | B | D | D |
| | | Normal temperature adhesiveness | | | B | D | D | A |
| | | Blocking resistance | | | D | B | A | D |

It can be seen from Tables 1 to 4 that in Examples 1 to 28 in which the used composition for a functional layer contained a particulate polymer A having a volume-average particle diameter and an amount of THF elution within specific ranges and having a storage modulus at 25°C of not more than a specific value, a functional layer having high normal temperature adhesiveness was obtained, and internal resistance of an electrochemical device including the functional layer was reduced.

In contrast, it can be seen that in Comparative Example 1 in which the used composition for a functional layer contained a particulate polymer A having an amount of THF elution outside of a specific range and Comparative Example 4 in which the used composition for a functional layer contained a particulate polymer A having a volume-average particle diameter outside of a specific range, internal resistance of an electrochemical device increased as compared to Examples 1 to 28.

It can also be seen that in Comparative Example 2 in which the used composition for a functional layer contained a particulate polymer A having a storage modulus exceeding a specific value, normal temperature adhesiveness of a functional layer decreased as compared to Examples 1 to 28.

Moreover, it can be seen that in Comparative Example 3 in which the used composition for a functional layer contained a particulate polymer A having a volume-average particle diameter outside of a specific range, normal temperature adhesiveness of a functional layer decreased, and internal resistance of an electrochemical device increased compared to Examples 1 to 28.

### INDUSTRIAL APPLICABILITY

According to the present disclosure, it is possible to provide a composition for an electrochemical device functional layer with which it is possible to form a functional layer for an electrochemical device that has excellent normal temperature adhesiveness and can reduce internal resistance of an electrochemical device.

Moreover, according to the present disclosure, it is possible to provide a laminate for an electrochemical device that can reduce internal resistance of an electrochemical device.

Furthermore, according to the present disclosure, it is possible to provide an electrochemical device that has low internal resistance.

## Claims

1. A composition for an electrochemical device functional layer comprising a particulate polymer A, wherein
the particulate polymer A has a volume-average particle diameter of not less than 0.75 µm and not more than 17.5 µm,
the particulate polymer A has an amount of elution into tetrahydrofuran of not less than 0.05 mass% and not more than 60 mass%, and
the particulate polymer A has a storage modulus at 25°C of 35 MPa or less.

2. The composition for an electrochemical device functional layer according to claim 1, wherein a tetrahydrofuran eluting component of the particulate polymer A has a number-average molecular weight of not less than 500 and not more than 500,000.

3. The composition for an electrochemical device functional layer according to claim 1, wherein the particulate polymer A has a glass-transition temperature of not lower than -50°C and not higher than 95°C.

4. The composition for an electrochemical device functional layer according to claim 1, wherein the particulate polymer A has a degree of swelling in electrolyte solution of not less than 100% and not more than 500%.

5. The composition for an electrochemical device functional layer according to claim 1, further comprising a dispersion medium including water, wherein the composition for an electrochemical device functional layer has a pH of not lower than 3.0 and not higher than 12.0.

6. The composition for an electrochemical device functional layer according to claim 1, further comprising a particulate polymer B differing from the particulate polymer A and a dispersant, wherein a mass ratio of the particulate polymer A and the particulate polymer B, expressed as particulate polymer A/particulate polymer B, is not less than 1/99 and not more than 99/1.

7. The composition for an electrochemical device functional layer according to claim 1, wherein the particulate polymer A includes an aromatic vinyl monomer unit in a proportion of 10 mass% or more.

8. The composition for an electrochemical device functional layer according to claim 1, wherein the particulate polymer A includes a cross-linkable monomer unit in a proportion of not less than 0.01 mass% and not more than 50 mass%.

9. The composition for an electrochemical device functional layer according to claim 1, wherein the particulate polymer A has a core-shell structure.

10. The composition for an electrochemical device functional layer according to claim 9, wherein a mass ratio of a core portion and a shell portion of the core-shell structure, expressed as core portion/shell portion, is not less than 0.1/99.9 and not more than 99.9/0.1.

11. The composition for an electrochemical device functional layer according to claim 1, further comprising non-conductive heat-resistant particles.

12. A laminate for an electrochemical device comprising: a substrate; and a functional layer for an electrochemical device formed on the substrate, wherein the functional layer for an electrochemical device is formed using the composition for an electrochemical device functional layer according to any one of claims 1 to 11.

13. An electrochemical device comprising the laminate for an electrochemical device according to claim 12.
